# EUROPÄISCHE PATENTSCHRIFT

(11) **EP 3 157 653 B1**
(45) Veröffentlichungstag und Bekanntmachung des Hinweises auf die Patenterteilung: **03.06.2020**
(21) Anmeldenummer: 15729838.1
(22) Anmeldetag: 17.06.2015
(51) Int. Cl.: B01D 46/10, B01D 46/52

(54) **FILTER UND FILTEREINSATZ**
FILTER AND FILTER CARTRIDGE
FILTRE ET CARTOUCHE FILTRANTE

(30) Priorität: 18.06.2014 DE 202014004897 U; 18.06.2014 DE 202014004894 U; 11.11.2014 DE 202014008899 U
(43) Veröffentlichungstag der Anmeldung: 26.04.2017
(73) Patentinhaber: Mann+Hummel GmbH, 71636 Ludwigsburg (DE)
(72) Erfinder: KAUFMANN, Michael, 67149 Meckenheim (DE); RUHLAND, Klaus-Dieter, 67149 Meckenheim (DE)
(74) Vertreter: Seyboth, Matthias
(86) Internationale Anmeldenummer: PCT/EP2015/063537
(87) Internationale Veröffentlichungsnummer: WO 2015/193341

(56) Entgegenhaltungen:
- EP-A1- 2 106 836
- WO-A1-2013/104794
- DE-U1- 8 808 632
- JP-A- H11 267 433
- US-A- 5 795 361
- US-A1- 2008 307 759
- US-A1- 2010 043 366

## Beschreibung

### Technisches Gebiet

Die vorliegende Erfindung betrifft einen Filter, insbesondere für Brennkraftmaschinen, zur Filterung eines Fluids, insbesondere von Luft sowie einen Filtereinsatz, insbesondere für einen solchen Filter.

### Stand der Technik

Insbesondere bei Bau- und Landmaschinen gewinnt die Motorluftfiltration zunehmend an Bedeutung. Zum einen werden immer leistungsfähigere Luftfilter eingesetzt, da höhere Motorleistungen und strengere Emissionsrichtlinien einen erhöhten Luftdurchsatz durch den Motor erfordern. Zum anderen vergrößert sich Anzahl an Baugruppen, die standardmäßig verbaut werden, wie etwa Klimaanlagen. Dies verringert den zur Verfügung stehenden Bauraum im Fahrzeug. Schließlich besteht das Bestreben, Fahrzeuge kleiner und leichter zu gestalten, was ebenfalls zu Lasten des zur Verfügung stehenden Bauraums geht. Aus EP 2 106 836 A1 und WO 2013/104 794 A1 sind gefaltete Filterelemente mit einer zur Abströmfläche nicht parallelen Anströmfläche bekannt. Aus DE 88 08 632 U1 ist ein quaderförmiges, gefaltetes Filterelement mit einer schräg verlaufenden Dichtung bekannt.

Für Einsatz in Fahrzeugen, die wenig Bauraum für Filtrationszwecke bieten, werden im Allgemeinen sogenannte Kompaktluft- oder Z-Filter mit durch aufeinanderliegenden Well- und Glattlagen eines Filtermediums gebildeten, wechselseitig verschlossenen Kanälen eingesetzt, die inline durchströmbar sind. Solche Filter sind beispielsweise aus US 2008/0307759 A1 oder US 2010/0043366 A1 bekannt. Dies bedeutet, dass die Anströmrichtung und die Abströmrichtung parallel verlaufen und im Wesentlichen miteinander fluchten. Oftmals muss die aus dem Luftfilter abströmende Luft je nach Anwendungsfall nach dem Durchströmen des Filters umgelenkt werden. Hierzu kann beispielsweise ein Rohrkrümmer dem Filtergehäuse nachgeschaltet sein. Derartige nachgeschaltete Bauteile erhöhen jedoch wiederum den Bauraumbedarf der gesamten Anordnung.

Es ist eine Aufgabe der Erfindung, einen Filter, insbesondere für Brennkraftmaschinen, zur Filterung eines Fluids, insbesondere von Luft, anzugeben, der bei vergleichbarer Filterleistung weniger Bauraum beansprucht.

Die oben genannte Aufgabe wird jeweils durch verschiedene Aspekte der im Folgenden beschriebenen Ausführungsformen eines Filters, insbesondere für Brennkraftmaschinen, zur Filterung eines Fluids, insbesondere von Luft sowie eines Filtereinsatzes, insbesondere für einen solchen Filter gelöst. Die verschiedenen Aspekte können wie aus den Ausführungsbeispielen ersichtlich einzeln oder kombiniert vorteilhaft in Ausführungsformen enthalten sein, wobei bei Kombination einzelne Aspekte die Vorteile anderer Aspekte unterstützen und ein synergistisches Zusammenwirken zu einem vorteilhaften Produkt führt.

### Offenbarung der Erfindung

Diese Aufgabe wird durch einen Filtereinsatz für einen Filter, insbesondere für Brennkraftmaschinen, zur Filtration eines Fluids, insbesondere von Luft, gemäß Anspruch 1, sowie durch einen Filter nach einem der Ansprüche 8 bis 14 gelöst. Weitere Ausgestaltungen der Erfindung sind in den Unteransprüchen angegeben.

Der erfindungsgemäße Filtereinsatz weist eine prismatische Grundform auf, wobei die parallel zueinander angeordneten Grundfläche und Deckfläche eine polygone Grundform aufweisen. Der Filtereinsatz weist entsprechend der polygonen Grundform der Grund- und Deckflächen zumindest drei, bevorzugt vier Mantelflächen auf. Eine erste Mantelfläche ist benachbart einer zweiten Mantelfläche. Sowohl die erste Mantelfläche als optional auch die zweite Mantelfläche sind Anströmflächen. Alternativ sind die erste Mantelfläche und bevorzugt zusätzlich die zweite Mantelfläche Abströmflächen. Die erste Mantelfläche und die zweite Mantelfläche stehen in Wesentlichen zueinander senkrecht. Mit im Wesentlichen ist ein Winkelbereich von 80° bis 100° umfasst. Eine dritte Mantelfläche liegt der ersten Mantelfläche bevorzugt im Wesentlichen gegenüber bzw. ist von dieser in Durchströmungsrichtung beabstandet und ist im Gegensatz zu der ersten und zweiten Mantelfläche eine Abströmfläche, wenn die erste und die zweite Mantelfläche Anströmflächen sind oder die dritte Mantelfläche ist eine Anströmfläche, wenn die erste und bevorzugt die zweite Mantelfläche Abströmflächen sind. Die dritte Mantelfläche schließt mit der ersten Mantelfläche einen Winkel ein, der kleiner 80° und größer 10° ist und sich insbesondere zwischen 70° und 20° befindet. Besonders bevorzugt sind Winkel wie 45° oder 60°.

Im Folgenden wird die oben erwähnte erste Alternative beschrieben, bei der die erste und optional auch die zweite Mantelfläche Anströmflächen sind und die dritte Mantelfläche Abströmfläche ist. Die Ausführungen geltend entsprechend für den umgekehrten Fall der zweiten Alternative, bei dem die erste und die zweite Mantelfläche Abströmfläche und die dritte Mantelfläche Anströmfläche sind. Bei der beschriebenen Filtereinsatzgeometrie ergibt sich in der Regel eine Mantelfläche als Anströmfläche, die zuerst von dem Hauptfluidstrom getroffen wird. Die zweite, optional zusätzlich als Anströmfläche verwendete Mantelfläche unterstützt das Eintreten des Fluids in den Filtereinsatz und vergrößert die Anströmfläche. Über die dritte Mantelfläche strömt das Fluid ab. Dadurch, dass die dritte Mantelfläche zur ersten Mantelfläche geneigt ist, ergibt sich für einen Filter mit einem solchen Filtereinsatz die Möglichkeit, die Abströmrichtung bereits innerhalb des Filtergehäuses in der gewünschten Art festzulegen. Eine externe Umlenkung außerhalb des Filtergehäuses beispielsweise mittels eines gekrümmten Abströmstutzens ist nicht mehr notwendig. Es werden somit zwei Vorteile erzielt. Einerseits ergibt sich eine deutlich vergrößerte Anströmfläche, welche eine unter Umständen bessere Ausnutzung der Filterkapazität ermöglicht. Gleichzeitig erlaubt die erfindungsgemäße Filtergeometrie eine Umlenkung der Hauptströmungsrichtung innerhalb des Filtereinsatzes, wodurch der durch den Filter beanspruchte Bauraum optimiert, das heißt verkleinert werden kann.

Als Hauptströmungsrichtung wir die gemittelte Richtung der Strömung an einer Position des Weges durch das Filtersystem und/oder Filterelement verstanden. Beispielsweise ist die Hauptströmungsrichtung innerhalb eines Zyklonblocks aus einer Vielzahl von Inline-Zyklonzellen definiert durch die axiale Erstreckung der Zyklonzellen. Beim Auftreffen auf die Anströmfläche eines Filterelements wird die Hauptströmungsrichtig im Wesentlichen senkrecht zur dieser Anströmfläche stehen und im Übrigen durch den Weg des geringsten Widerstandes definiert, der durch ein Filterelement hindurch im Falle von einem gefalteten Filterkörper durch den Verlauf der Faltentaschen zwischen Roh- und Reinseite, und im Falle eines Filterkörpers mit wechselseitig verschlossenen Kanälen durch die Erstreckung der Kanäle definiert ist.

Erfindungsgemäß ist die polygone Grundform ein Viereck, wobei eine vierte Mantelfläche vorgesehen ist, die der zweiten Mantelfläche parallel gegenüberliegt. Besonders bevorzugt sind dabei die zweite und vierte Mantelfläche sowie die Grund- und Deckfläche senkrecht zur ersten Mantelfläche ausgerichtet. Weiter bevorzugt sind Grund- und Deckfläche senkrecht zur dritten Mantelfläche ausgerichtet.

Die erste Mantelfläche ist bevorzugt die einzige Anströmfläche. Die dritte Mantelfläche ist bevorzugt die einzige Abströmfläche.

Eine bevorzugte Weiterbildung der Erfindung sieht vor, dass der Filtereinsatz einen Filterkörper mit einem zickzackförmig gefalteten Filtermedium aufweist. Ein derart gefaltetes Filtermedium besitzt eine hohe Oberfläche und lässt sich verhältnismäßig kostengünstig in die gewünschte Grundform bringen.

Eine Ausgestaltung sieht vor, dass die Falten äußere Faltkanten aufweisen, die auf der ersten Mantelfläche liegen bzw. diese bilden und den äußeren Faltkanten gegenüberliegende innere (d.h. auf der Reinseite liegende) Faltkanten aufweisen, die auf der dritten Mantelfläche liegen bzw. diese bilden. Es erfolgt somit eine Anströmung des Filtereinsatzes im Wesentlichen senkrecht zu den Faltkanten. Gleiches gilt für die Abströmung, wobei die dritte Mantelfläche gegenüber der ersten Mantelfläche geneigt ist.

Bei der beschriebenen zickzackförmigen Faltung des Filtermediums weisen die Falten zumindest eine, in der Regel zwei, Stirnseite(n) auf, die durch die zickzackförmig verlaufenden Kanten des gefalteten Filtermediums gebildet sind und entweder auf der zweiten (und vierten) Mantelfläche oder auf Grund- und Deckfläche des prismatischen Filterkörpers zu liegen kommen. Es erfolgt somit die Anströmung des Filtermediums über die Faltkante und optional auch über die Stirnseite der Falte. Die Stirnseiten müssen in diesem Fall so ausgestaltet sein, dass keine direkte Zuströmung zur Reinseite des Filtereinsatzes erfolgen kann, beispielsweise durch eine einseitige Verklebung auf der Reinseite.

Eine besonders bevorzugte Ausführungsform der Erfindung sieht vor, dass sich die Tiefe benachbarter Faltkanten oder Falten unterscheidet und insbesondere jede zweite Falte die gleiche Tiefe aufweist. Die unterschiedliche Tiefe benachbarter Faltkanten ermöglicht eine Anschrägung des Filtereinsatzes und so die Ausbildung der gewünschten Geometrie.

Eine besonders bevorzugte Weiterbildung sieht dabei vor, dass sich die Tiefe benachbarter Falten unterscheidet, insbesondere derart, dass die Faltenhöhen an zweiter und vierter Mantelfläche unterschiedlich sind, wobei sich die Faltenhöhe zwischen zweiter und vierter Mantelfläche kontinuierlich, insbesondere linear, ändert.

Eine besonders bevorzugte Ausführungsform der Erfindung sieht vor, dass die Falten je zwei Stirnseiten aufweisen. Eine Stirnseite der Falten liegt auf der zweiten Mantelfläche. Die andere Stirnseite der Falten liegt auf einer vierten Mantelfläche. Die zweite Mantelfläche ist größer als die vierte Mantelfläche. Die vierte Mantelfläche weist mehr Faltkanten auf als die zweite Mantelfläche, insbesondere doppelt so viele. Durch die Verdopplung der Faltkanten an der vierten Mantelfläche ist es möglich, den Winkel zwischen der dritten Mantelfläche und der ersten Mantelfläche her- und einzustellen.

Eine alternativ bevorzugte Ausführungsform der Erfindung sieht vor, dass die Falten je zwei Stirnseiten aufweisen. Eine Stirnseite der Falten liegt auf der Grundfläche und eine andere Stirnseite auf der Deckfläche. Grund- und Deckfläche sind bevorzugt deckungsgleich. Die zweite und vierte Mantelfläche werden dabei bevorzugt jeweils durch die erste bzw. letzte Falte eines Faltenbalges gebildet. Bevorzugt sind hierbei die Faltenhöhen an zweiter und vierter Mantelfläche unterschiedlich, wobei sich die Faltenhöhe zwischen zweiter und vierter Mantelfläche kontinuierlich, insbesondere linear, ändert. Dadurch ist es möglich, den Winkel zwischen der dritten Mantelfläche und der ersten Mantelfläche her- und einzustellen. Bevorzugt ist zwischen der ersten Mantelfläche, die weiter bevorzugt Anströmfläche ist, und sowohl zweiter als auch vierter Mantelfläche jeweils ein rechter Winkel gebildet. Alternativ zur beschriebenen Faltenanordnung kann auch ein Schichtaufbau aus abwechselnden Glatt- und Welllagen verwendet werden, zwischen welchen sich Kanäle bilden, die mittels Klebstoff wechselseitig verschlossen werden können. Der zwischen erster und dritter Mantelfläche gebildete Winkel kann dabei durch eine Schichtung von unterschiedlich langen Schichten erfolgen, wobei sich die Schichtlänge zwischen zweiter und vierter Mantelfläche (dis-)kontinuierlich, insbesondere linear, ändert.

Der Erfindungsgedanke findet auch Niederschlag in einem Filter mit einem erfindungsgemäßen Filtereinsatz. In einem solchen Filter kann vorgesehen sein, dass die Hauptanströmrichtung des Filters und die Hauptabströmrichtung des Filters einen Winkel von mehr als 30°, insbesondere mehr als 45° bevorzugt mehr als 60° und insbesondere 90° einschließen. Als Hauptabströmrichtung wird die mittlere Richtung der Strömung zwischen Abströmfläche des Hauptfilterelements und der Anströmfläche des Sekundärelements, sofern vorhanden, oder der Ausströmöffnung aus dem Filtergehäuse verstanden.

Alternativ kann vorgesehen sein, dass die Hauptanströmrichtung des Filters zur Hauptabströmrichtung des Filters parallel und versetzt ist. Aufgrund der durch den Filtereinsatz realisierten Schrägheit der Abströmfläche des Filtereinsatzes zur Anströmfläche des Filtereinsatzes kann innerhalb des Filters eine Umlenkung der Hauptanströmrichtung auf die Hauptabströmrichtung dergestalt erfolgen, dass die Hauptabströmrichtung einen Winkel mit der Hauptanströmrichtung einschließt oder um eine bestimmte Länge versetzt ist. Dies lässt sich einfach und kostengünstig durch entsprechende Ausströmöffnungen an dem Filter realisieren.

Eine ebenfalls vorteilhafte Weiterentwicklung der Erfindung sieht einen Filter mit einem erfindungsgemäßen Primärfilterelement und erfindungsgemäßen Sekundärfilterelement vor. Durch die Ausgestaltung von Primär- und Sekundärfiltereinsatz mit einer prismatischen Grundform entsteht eine besonders große Freiheit der Umlenkung der Fluidströme in einem derartigen Filter.

Erfindungsgemäß weist der Filtereinsatz im Bereich der Abströmfläche eine Dichtung zur Trennung eines Filterinnenraums in Reinseite und Rohseite auf, wobei die Dichtfläche und die Hauptfiltereinsatz-Anströmfläche parallel verlaufen. In einer bevorzugten Ausführungsform weist der Filtereinsatz eine Abstandsstruktur zur Festlegung eines Abstands zwischen dem Filtereinsatzrahmen und einem stromabwärts anordenbaren
weiteren Filtereinsatz, insbesondere Sekundärfiltereinsatz, auf. Mittels der Abstandstruktur wird ein vorher festgelegter Abstand zwischen Filtereinsatz, der beispielsweise ein Hauptfiltereinsatz sein kann, und einem stromabwärts angeordneten weiteren Filtereinsatz, der beispielsweise ein Sekundärfiltereinsatz sein kann, auch unter extremen Einsatzbedingungen wie beispielsweise Vibrationen aufrecht erhalten. Dies sorgt dafür, dass der weitere Filtereinsatz sich nicht aus seiner vorgesehenen Position heraus bewegen und damit seine Dichtfunktion und Sicherungsfunktion verlieren kann.

Bei einer Ausgestaltung der Erfindung ist vorgesehen, dass die Abstandsstruktur innerhalb der Dichtung, insbesondere mehrfach entlang der Dichtung und insbesondere am Umfang der Abströmfläche angeordnet ist. Bei einer solchen Ausgestaltung kann es vorgesehen sein, dass der Außenumfang senkrecht zur Hauptströmungsrichtung des weiteren Filtereinsatzes in Form und Größe der Dichtung folgt und somit eine Abstützfläche für die Abstandsstruktur bietet.

Eine vorteilhafte Ausführung der Erfindung sieht vor, dass die Normalen von Abströmfläche oder/und einer Dichtfläche der Dichtung mit der Hauptströmungsrichtung, insbesondere der Hauptströmungsrichtung innerhalb des Filtereinsatzes, einen Winkel zwischen 5° und 45°, insbesondere einen Winkel von 24°±10° und insbesondere einen Winkel von 24°±5° einschließt. Im regelmäßig auftretenden Falle einer senkrecht zur Hauptströmungsrichtung stehenden Anströmfläche (oder erste Mantelfläche) bedeutet dies, dass die Abströmfläche (bzw. dritte Mantelfläche) um den genannten Winkel gegenüber der Anströmfläche geneigt ist. Eine derart zur Hauptströmungsrichtung gewinkelte Abströmfläche besitzt eine größere Fläche als eine nicht gewinkelte Abströmfläche. Generell bietet die Abwinklung der Abströmfläche oder/und der Dichtfläche die Möglichkeit, bereits eine Umlenkung der Hauptströmungsrichtung innerhalb des Filtereinsatzes oder direkt nachfolgend dem Filtereinsatz vorzunehmen. Dies spart Bauraum und verbessert aufgrund kürzerer Strömungsstrecken den Druckverlust innerhalb des Filters.

Vorteilhafterweise ist die Abstandsstruktur integral mit der Dichtung ausgebildet, insbesondere in die Dichtung eingeformt. Dies ermöglicht beispielsweise die Verwendung des gleichen Materials und die Herstellung der Abstandsstruktur im gleichen Arbeitsschritt wie die Dichtung.

Eine besonders bevorzugte Ausführungsform sieht vor, dass die Abstandsstruktur dazu ausgelegt ist, im eingebauten Zustand des Filtereinsatzes eine Spann- oder Haltekraft auf einen in Hauptströmungsrichtung stromabwärts anordenbaren weiteren Filtereinsatz, insbesondere einen Sekundärfiltereinsatz, auszuüben, wobei die Kraft den weiteren Filtereinsatz in seine Einbauposition drückt. Dies kann beispielsweise dadurch erreicht werden, dass die Abstandsstruktur aus einem elastischen Material hergestellt ist. Wird der Filtereinsatz dann nach dem weiteren Filtereinsatz eingesetzt, kann durch die geeignete Wahl einer entsprechenden Geometrie bereits das Einsetzen eine Kraft auf den weiteren Filtereinsatz ausüben. Dies verbessert wiederum die Zuverlässigkeit des Filters, da der weitere Filtereinsatz dauerhaft einer Kraft ausgesetzt ist, die ihn an seinem vorgesehenen Platz hält.

Bei einer bevorzugten Ausgestaltung der Erfindung wirkt die Dichtung axial in Richtung der Hauptströmungsrichtung. Dies bedeutet, dass die zur Abdichtung aufzubringende Kraft parallel zur Abströmungsrichtung verläuft.

Bei einer Ausführungsform der Erfindung ist der Filterkörper als Filterbalg, insbesondere mit variabler Faltenhöhe, ausgebildet. Mittels der variablen Faltenhöhe kann beispielsweise eine schräg zur Hauptströmungsrichtung verlaufende Abströmfläche realisiert werden. Als variable Faltenhöhe wird ein Aufbau eines zickzackförmig gefalteten Filterkörpers verstanden, bei welchem die Faltenhöhen über eine durch die Aneinanderreihung von Faltkanten definierte Länge des Faltenbalges nicht konstant ist, sondern sich kontinuierlich oder diskontinuierlich ändert oder in benachbarten Abschnitten unterscheidet. Bevorzugt ändert sich die Höhe der Falten kontinuierlich und weiter bevorzugt linear über die Länge des Balges.

In einer vorteilhaften Ausführungsform ist ein Sekundärfiltereinsatz stromabwärts des Hauptfiltereinsatzes anordenbar. Der Filtereinsatzrahmen des Hauptfiltereinsatzes oder der Hauptfiltereinsatz weist bevorzugt im Bereich der Abströmfläche eine Dichtung zur Trennung des Filtergehäuses in Reinseite und Rohseite sowie eine Abstandsstruktur zur Festlegung eines Abstands zwischen dem Filtereinsatzrahmen und dem Sekundärfiltereinsatz auf.

Bei einer vorteilhaften Ausführungsform des Filters ist vorgesehen, dass das Filtergehäuse eine Einführrichtung aufweist, die im Wesentlichen senkrecht zur Hauptströmungsrichtung, insbesondere der Hauptströmungsrichtung innerhalb des Hauptfiltereinsatzes, liegt. Dies ermöglicht nach dem Einsetzen des Sekundärfiltereinsatzes ein Einsetzen des Hauptfiltereinsatzes derart, dass der Sekundärfiltereinsatz gegen ein Herausbewegen aus seinem vorgesehenen Sitz blockiert ist.

Bei einer bevorzugten Ausführungsform ist vorgesehen, dass der Sekundärfiltereinsatz eine Dichtung zur Anlage an dem Filtergehäuse aufweist, wobei die Dichtung insbesondere radial zur Durchströmungsrichtung des Sekundärfiltereinsatzes wirkend ausgelegt ist. Es ist somit nicht notwendig, in axialer Verlängerung zur Hauptdurchströmungsrichtung des Sekundärfiltereinsatzes am Filtergehäuse eine Dichtfläche vorzusehen. Vielmehr wirkt die Dichtung senkrecht zur Hauptdurchströmungsrichtung gegen das Filtergehäuse bereits beim Einsetzen in den vorgesehenen Sitz.

Gemäß einer Ausführungsform der Erfindung weist der Sekundärfiltereinsatz einen Sekundärfilterkörper und einen den Sekundärfilterkörper tragenden Sekundärfiltereinsatzrahmen auf. Dabei kann es vorgesehen sein, dass im eingesetzten Zustand des Hauptfiltereinsatzes und des Sekundärfiltereinsatzes die Abstandsstruktur des Hauptfiltereinsatzes die Dichtung oder den Sekundärfiltereinsatzrahmen des Sekundärfiltereinsatzes kontaktiert. Somit ist bei im Einsatzfall auftretenden Vibrationen ein Herausbewegen des Sekundärfiltereinsatzes nicht möglich, da die Abstandsstruktur des Hauptfiltereinsatzes den Raum, über den der Sekundärfiltereinsatz eingesetzt wurde, blockiert.

Die dritte Aufgabe wird durch einen Filtereinsatz für einen Filter zur Filterung eines Fluids, insbesondere von Luft, insbesondere für eine Brennkraftmaschine gemäß Anspruch 24 gelöst. Weitere Ausgestaltungen der Erfindung sind in den Unteransprüchen angegeben.

Der erfindungsgemäße Filtereinsatz weist bevorzugt im Bereich der Anströmfläche einen außen um den Filterrahmen und/ oder um die Anströmfläche und/oder die erste Mantelfläche umlaufenden Kantenschutz auf. Der Kantenschutz verbindet den Filterkörper und den Filtereinsatzrahmen miteinander oder der Kantenschutz liegt von innen am Filtereinsatzrahmen insbesondere formschlüssig an. Erfindungsgemäß ergibt sich somit ein synergistisches Zusammenwirken aus Kantenschutz und der Verbindung des Filterkörpers mit dem Filtereinsatzrahmen. Dies ist besonders vorteilhaft bei der gängigen Praxis im Baumaschinensektor, Filtereinsätze durch Ausblasen oder Ausklopfen ab zu reinigen.

Insbesondere ist bei besonders bevorzugten Ausführungsformen vorgesehen, dass der Kantenschutz eine für das zu filternde Fluid dichte Verbindung zwischen Filterkörper und Filtereinsatzrahmen bildet, insbesondere durch ein formschlüssiges Umgießen von Filterkörper und Filtereinsatzrahmen mittels einer im Filtrationsbereich üblichen Vergussmasse wie Polyurethan. Somit bildet die Verbindung aus Filterkörper und Filtereinsatzrahmen gleichzeitig die Abdichtung des Filterkörpers gegenüber dem Filtereinsatzrahmen.

Bei einer erfindungsgemäßen Weiterbildung der Erfindung ist vorgesehen, dass der Filtereinsatzrahmen im Bereich des Kantenschutzes Ausnehmungen aufweist, die von dem Kantenschutz ausgefüllt sind. Dies ermöglicht eine besonders gute mechanische Verbindung zwischen dem Kantenschutz und dem Filtereinsatzrahmen.

Besonders bevorzugt erstrecken sich die Ausnehmungen senkrecht zur Hauptströmungsrichtung. Es ist somit nicht notwendig, in dem Filtereinsatzrahmen eine Abwicklung für den Kantenschutz vorzusehen. Vielmehr kann der Kantenschutz vollständig um die anströmungsseitigen Kanten des Filtereinsatzrahmens herum liegen und gleichzeitig den Filtereinsatzrahmen durch die Ausnehmungen durchdringen und so eine besonders mechanisch stabile Verbindung einzugehen.

Bei einer Ausgestaltung der Erfindung umgibt der Filtereinsatzrahmen den Filterkörper. Zusätzlich bestimmt der Filtereinsatzrahmen die Hauptströmungsrichtung des Filtereinsatzes.

Eine besonders bevorzugte Ausführungsform der Erfindung sieht vor, dass der Kantenschutz den Filterkörper teilweise durchdringt. Somit ergibt sich nach dem Aushärten des Kantenschutzes eine besonders stabile Verbindung zwischen dem Kantenschutz und dem Filtereinsatzrahmen einerseits und dem Filtereinsatzrahmen und dem Filterkörper andererseits.

Eine besonders bevorzugte Weiterbildung der Erfindung sieht vor, dass die Verbindung zwischen Filterkörper und Filtereinsatzrahmen eine Verklebung ist, die einteilig mit dem Kantenschutz ausgebildet ist. Insbesondere können die Verklebung und der Kantenschutz aus dem gleichen Material, insbesondere aus einem Polyurethan, gebildet sein. Dies ermöglicht insbesondere bei der Herstellung technische Vorteile, da die Verklebung zwischen dem Filtereinsatzrahmen und dem Filterkörper, die Abdichtung zwischen Filterkörper und Filtereinsatzrahmen und der Kantenschutz in einem Arbeitsschritt hergestellt werden können und gleichzeitig eine besonders robuste Ausführungsform entsteht.

In einer Ausführungsform weist der Filtereinsatz und/oder der Filterkörper eine äußere, als Keilstumpf ausgebildete Form auf.

Eine Weiterbildung der Erfindung sieht vor, dass der Filterkörper als Filterbalg, insbesondere mit variabler Faltenhöhe, ausgebildet ist. Die variable Faltenhöhe ermöglicht eine Abwinklung zwischen Abströmfläche und Hauptströmungsrichtung.

Erfindungsgemäß ist der Kantenschutz so ausgelegt, dass die bei einem Ausklopfen des Filtereinsatzes auftretenden Kräfte durch den Kantenschutz zumindest teilweise aufgenommen werden können und insbesondere eine Beschädigung des Filtereinsatzes verhindert werden kann.

Der erfindungsgemäße Filter, insbesondere für Brennkraftmaschinen, zur Filterung eines Fluids, insbesondere von Luft, weist ein Filtergehäuse mit einem rohseitigen Bereich und einem reinseitigen Bereich auf. In das Filtergehäuse ist ein Hauptfilterelement einsetzbar, das eine Hauptfilterelement-Anströmfläche, eine Hauptfilterelement-Strömungsrichtung, eine Hauptfilterelement-Abströmfläche sowie eine auf einer Dichtfläche angeordnete Dichtung aufweist. Beispielsweise kann das Hauptfilterelement eine prismatische Grundform aufweisen. Insbesondere kann eine Durchströmung der Mantelflächen erfolgen. Die Dichtung dient zur fluiddichten Trennung des rohseitigen Bereichs des Filtergehäuses von dem reinseitigen Bereich des Filtergehäuses. Ferner weist der Filter optional ein stromabwärts des Hauptfilterelements angeordnetes Sekundärfilterelement mit einer Sekundärfilterelement-Anströmfläche, einer Sekundärfilterelement-Strömungsrichtung und einer Sekundärfilterelement-Abströmfläche auf. Die Dichtfläche ist schräg zur Hauptströmungsrichtung des Hauptfilterelements angeordnet. Die schräge Dichtfläche eröffnet innerhalb des Filtergehäuses stromabwärts des Hauptfilterelements einen Raum, in dem einerseits das Sekundärfilterelement angeordnet sein kann. Gleichzeitig wird durch die zur Hauptströmungsrichtung schräg stehende Dichtfläche bereits im Filtergehäuse eine Umlenkung der Hauptströmungsrichtung vorgenommen. Somit kann bei geeigneter Anbringung einer Abströmöffnung an dem Filtergehäuse eine Umlenkung des Fluidstroms in die gewünschte Richtung erfolgen. Es kann auf ansonsten notwendige Rohrkrümmer oder dergleichen nach dem Gehäuse verzichtet werden.

Die Dichtfläche und die Hauptströmungsrichtung können insbesondere einen Winkel einschließen, der zwischen 85° und 10° liegt. Innerhalb dieses Winkelbereichs stellt sich eine merkbare Umlenkung des Fluidstroms ein.

Eine Ausgestaltung der Erfindung sieht vor, dass die Dichtfläche gekrümmt ist und insbesondere auf einer Zylindermantelfläche liegt. Durch eine von dem Hauptfilterelement aus gesehene konkave Ausgestaltung der Dichtfläche ist der für das Hauptfilterelement zur Verfügung stehende Bauraum optimierbar und bietet bei geeigneter Wahl des Krümmungsradius ausreichend Platz für ein Sekundärelement. Gleichzeitig ist durch die Krümmung der Dichtfläche die Abströmungsrichtung des Filtergehäuses je nach Position der Abströmöffnung besonders einfach festzulegen. Bevorzugt liegt die Achse des Zylinders der Zylindermantelfläche senkrecht zu der Hauptfilterelement-Strömungsrichtung und senkrecht der Sekundärfilterelement-Strömungsrichtung.

Alternativ kann die Dichtfläche in einer Ebene liegen.

Die Erfindung sieht vor, dass die Dichtfläche und die Hauptfilterelement-Abströmfläche parallel verlaufen. So ergibt sich eine klar definierte Trennebene zwischen der Rohseite und der Reinseite des Filtergehäuses. Gleichzeitig ergibt sich bei einer gekrümmten Ausführung der Dichtungsfläche eine bauraumoptimierte Ausgestaltung des Filterinnenraums und damit des gesamten Filters.

Bevorzugt ist vorgesehen, dass die Sekundärelement-Anströmfläche parallel und beabstandet zu der Dichtfläche verläuft. Somit ist sichergestellt, dass bei einem Wechsel des Sekundärfilterelements die Reinseite des Filtergehäuses nicht verschmutzt wird. Bei einer gekrümmten Ausführung der Dichtfläche ergibt sich eine ebenfalls gekrümmte Sekundärelement-Anströmfläche.

Bei einer bevorzugten Ausgestaltung der Erfindung ist die Grundform des Sekundärfilterelements ein Quader. Dies ermöglicht einen einfachen Aufbau des Sekundärelements, beispielsweise aus einem gerade gefalteten Flachelement, bei welchem die an- und abströmseitigen Faltkanten jeweils Ebenen bilden, die bevorzugt in einem durch die Faltenhöhe definierten Abstand parallel zueinander angeordnet sind.

Alternativ kann die Grundform des Sekundärelements ein Prisma mit einer oder mehreren gekrümmten Mantelflächen sein wie beispielsweise ein Hohlzylindermantelabschnitt. Dies kann beispielsweise durch einen gekrümmten Flachbalg realisiert werden. Diese Form bietet die Möglichkeit, das Sekundärfilterelement an eine gekrümmte Hauptfilterelement-Abströmfläche anzupassen und so den Bauraum weiter zu optimieren.

In einer bevorzugten Ausführungsform der Erfindung ist die Grundform des Hauptfilterelements ein Prisma. Insbesondere können die Grundfläche und die Deckfläche des Prismas ein Viereck oder ein Fünfeck sein. Das Viereck oder das Fünfeck kann zwei oder drei rechte Winkel, einen spitzen und einen stumpfen Winkel aufweisen. Eine bevorzugte Ausführungsform der Erfindung sieht vor, dass eine Mantelseite des Prismas von außen gesehen konvex gekrümmt ist, sodass sich eine beispielsweise als Zylindermantelfläche ausgebildete Hauptfilterelement-Abströmfläche ergibt.

Eine vorteilhafte Ausführungsform der Erfindung sieht vor, dass das Hauptfilterelement ein Faltenbalg mit zumindest zwei verschiedenen Faltentiefen ist. Mittels zweier verschiedener Faltentiefen kann die zur Hauptströmungsrichtung des Hauptfilterelements geneigte Hauptfilterelement-Abströmfläche an den Faltenstirnseiten realisiert werden. Alternativ kann durch eine kontinuierlich ansteigende Faltenhöhe die zur Abströmungsrichtung des Hauptfilterelements geneigte Hauptfilterelement-Abströmfläche an den Faltenkanten realisiert werden. Die Begriffe Faltentiefe und Faltenhöhe werden hier synonym verwendet.

Eine vorteilhafte Ausgestaltung der Erfindung sieht vor, dass das Filtergehäuse eine Anströmrichtung, eine Abströmrichtung sowie einen Abströmbereich mit einer Abströmöffnung aufweist. An den Abströmbereich ist ein Abströmstutzen befestigbar, wobei der Abströmbereich eine Befestigungsfläche für den Abströmstutzen aufweist und die Befestigungsfläche mit der Hauptfilterelement-Strömungsrichtung einen Winkel von 45° einschließt. Die um 45° zur Hauptströmungsrichtung geneigte Befestigungsfläche befindet sich besonders bevorzugt so am Filtergehäuse angeordnet, dass sie in Hauptfilterelement-Strömungsrichtung gesehen innerhalb des Filtergehäuses liegt, das heißt, sie überragt dieses nicht. Gleichzeitig befindet sich diese Befestigungsfläche gesehen in einer Richtung senkrecht zur Hauptströmungsrichtung des Hauptfilterelements, also beispielsweise in einer Einführrichtung des Hauptfilterelements, unterhalb des Hauptfilterelements. Zusammengefasst ergibt sich eine Anordnung, in der das Hauptfilterelement und/oder das Sekundärelement in Hauptströmungsrichtung, insbesondere in Hauptströmungsrichtung des Filterelementes, die Abströmöffnung des Filtergehäuses zumindest teilweise, bevorzugt vollständig, überragen. Ein an dieser Befestigungsfläche angebrachter Abströmstutzen kann nun das abströmende gefilterte Fluid vergleichsweise einfach in beliebige Richtungen verteilen.

Eine besonders bevorzugte Ausführungsform der Erfindung sieht vor, dass der Abströmstutzen so geformt ist, dass sich innerhalb des Abströmstutzens eine Umlenkung der Strömungsrichtung um 45° ergibt. Dies bedeutet, dass der Abströmstutzen bevorzugt als 45°-Krümmer ausgeführt ist. Auf diese Weise ist lediglich die Orientierung des Abströmstutzens an dem Abströmbereich, insbesondere an der Befestigungsfläche, hinsichtlich der sich endgültig ergebenden Abströmrichtung relevant. Dies ermöglicht in besonders vorteilhafter Weise die Festlegung der Abströmrichtung des gefilterten Fluids mit einem einzigen Bauteil, nämlich dem Abströmstutzen. Durch geeignete Orientierung des Abströmstutzens an der Befestigungsfläche ergibt sich die endgültige Abströmrichtung des Filtergehäuses.

Eine bevorzugte Weiterentwicklung der Erfindung sieht vor, dass der Abströmstutzen einen rotationssymmetrisch ausgebildeten Befestigungsbereich zur Befestigung an der Befestigungsfläche des Filtergehäuses aufweist. Somit kann durch Drehung des Abströmstutzens die endgültige Festlegung der Abströmrichtung des gesamten Filtergehäuses festgelegt werden. Es ergibt sich somit zwischen der Anströmrichtung des Filtergehäuses und der Abströmrichtung des Filtergehäuses ein Winkelbereich zwischen 0° und 90° mit ein und denselben Bauteilen.

In gleicher Weise kann festgelegt sein, dass die Abströmrichtung aus dem Abströmstutzen und die Befestigungsfläche einen Winkel von 45° einschließen.

Eine alternative Weiterentwicklung des Erfindungsgedankens sieht vor, dass die Befestigungsfläche auf einer Zylindermantelfläche liegt. Die Achse des Zylinders liegt dabei vorzugsweise senkrecht zur Hauptströmungsrichtung des Hauptfilterelements. Eine derart gekrümmte Befestigungsfläche ist vorzugsweise mit einem entsprechend gekrümmten Befestigungsbereich eines Abströmstutzens kombiniert. Die Position des Abströmstutzens an dem Abströmbereich legt dann die Abströmrichtung des Filtergehäuses fest.

Vorzugsweise verlaufen die Befestigungsfläche und die Sekundärelement-Abströmfläche parallel. Dies ermöglicht eine extrem hohe Integration und damit Bauraumoptimierung.

Erfindungsgemäß kann bei einer Ausführungsform vorgesehen sein, dass das Hauptfilterelement entlang einer Einführachse in das Filtergehäuse einsetzbar und entnehmbar ist, wobei die Einführachse mit der Hauptströmungsrichtung einen Winkel zwischen 90° und dem Winkel einschließt, den die Dichtfläche und die Hauptströmungsrichtung einschließen, bevorzugt jedoch 90°. Gemäß dieser Ausführungsform weist das Filtergehäuse einen Deckel auf, der so ausgebildet ist, dass er im in das Filtergehäuse verschließenden Zustand auf das Hauptfilterelement eine Kraft in Richtung der Dichtfläche ausübt. Dies kann beispielsweise durch vom Deckel seitlich des Hauptfilterelements in das Filtergehäuse hineinragende, insbesondere keilförmige Schwerter erfolgen, die an ihren Schmalseiten jeweils eine Abstützfläche aufweisen. Die Schwerter stützen sich dabei bevorzugt mit einer ersten Abstützfläche am Filtergehäuse ab und liegen mit einer zweiten, der ersten gegenüberliegenden Abstützfläche an einer Anlagefläche des Hauptfilterelements oder dessen Trägerrahmen an und drücken dadurch die Dichtung des Hauptfilterelementes gegen die Dichtfläche des Gehäuses. Bevorzugt weisen die Abstützflächen der Schwerter zueinander einen Winkel auf, der dem Winkel zwischen Anströmfläche und Abström- bzw. Dichtfläche (bzw. zwischen erster und dritter Mantelfläche) entspricht. Durch die Schrägstellung der Dichtfläche wird die auf den Deckel ausgeübte Kraft zumindest teilweise in eine Axialkraft in Dichtrichtung umgewandelt, das heißt in eine Kraft, die teilweise in Richtung der Haupströmungsrichtung und bevorzugt senkrecht zur Dichtfläche und/oder Abströmfläche wirkt. Dies ergibt eine Kraft, die das Hauptfilterelement mit seiner an der Dichtfläche angebrachten Dichtung gegen einen Hauptfilterelementsitz am Filtergehäuse drückt.

Der Sekundärfiltereinsatz ist dazu ausgelegt, stromabwärts eines Hauptfiltereinsatzes in einen Filter eingesetzt zu werden. Er weist eine Anströmfläche, eine Abströmfläche und eine Abströmungsrichtung auf.

Ferner weist der Sekundärfiltereinsatz einen Filterkörper, der entlang der Abströmungsrichtung durchströmbar ist und bevorzugt einen den Filterkörper tragenden Filtereinsatzrahmen auf. Der Filtereinsatzrahmen weist weiter bevorzugt eine Dichtung zur Trennung eines Filterinnenraums eines Filters in Reinseite und Rohseite als auch weiter bevorzugt eine Verklebung zwischen dem Filterkörper und dem Filtereinsatzrahmen auf. Das separate Ausführen von Dichtung und Verklebung erlaubt eine wesentlich stabilere Ausgestaltung der Verklebung und ist von eigenständiger, erfinderischer Bedeutung.

Bei einer bevorzugten Ausgestaltung der Erfindung ist die Dichtung radial zur Hauptströmungsrichtung wirkend ausgelegt und läuft insbesondere im Wesentlichen senkrecht zur Hauptströmungsrichtung um den Sekundärfiltereinsatz um. Die Dichtung kann einen Moosgummi aufweisen.

Besonders bevorzugt ist vorgesehen, dass ein Trägerabschnitt des Filtereinsatzrahmens um den Filterkörper umläuft und der Trägerabschnitt an der Innenseite eine Innenkante, insbesondere eine Nut, zur Aufnahme eines Klebematerials der Verklebung aufweist. Dies ermöglicht eine mechanisch besonders stabile Verbindung zwischen dem Filterkörper und dem Filtereinsatzrahmen. Insbesondere kann vorgesehen sein, dass die Tiefe der Nut in Richtung der Hauptströmungsrichtung verläuft.

Bei einer Weiterbildung der Erfindung umläuft ein Dichtungsaufnahmeabschnitt des Filtereinsatzrahmens außen um den Filterkörper. Insbesondere bei der Entnahme und dem Einbau des Sekundärfiltereinsatzes werden auf die Dichtung ausgeübte Scherkräfte durch den Dichtungsaufnahmeabschnitt aufgenommen.

Eine Ausführungsform sieht vor, dass die Verklebung ein Polyurethan aufweist und insbesondere geschäumt ist. Insbesondere kann die Verklebung den Filterkörper teilweise durchdringen und so für eine besonders feste Verklebung zwischen Filterkörper und Filtereinsatzrahmen sorgen.

Bei einer Weiterbildung der Erfindung kann vorgesehen sein, dass der Filtereinsatzrahmen abströmseitig ein die Abströmfläche überdeckendes Gitter aufweist. Dies erhöht bei hohen Differenzdrücken die Kollapsfestigkeit des Sekundärfiltereinsatzes. Insbesondere kann das Gitter einteilig mit dem Filtereinsatzrahmen ausgebildet sein.

Der Sekundärfiltereinsatz weist bevorzugt einen anströmseitigen Griffbereich auf. Der Griffbereich ist dabei bevorzugt so ausgelegt, dass eine Anströmung des Filterkörpers über den Griffbereich und eine manuelle Entnahme des Filtereinsatzes möglich ist. Dies ist von eigenständiger, erfinderischer Bedeutung. Auf diese Weise wird der Bereich vergrößert, über den der Filterkörper angeströmt werden kann. Nachdem in der Regel ohnehin eine Möglichkeit zur manuellen Handhabung des Filtereinsatzes, insbesondere bei Einbau und Ausbau des Filtereinsatzes vorzusehen sind, wird durch die Auslegung des Griffbereichs für ein Durchströmen des zu filternden Fluids der durch den Filtereinsatz hervorgerufene Druckabfall oder Druckverlust signifikant verringert.

Bei einer bevorzugten Weiterentwicklung der Erfindung ist vorgesehen, dass seitlich zu der Hauptanströmfläche eine Nebenanströmfläche vorgesehen ist. Dies erschließt der generell verbesserten Anströmsituation des Filtereinsatzes eine weitere Anströmfläche des Filtereinsatzes und reduziert somit den Druckverlust durch den Filtereinsatz weiter. Dabei kann insbesondere vorgesehen sein, dass der Griffbereich ein Anströmen des Filterkörpers seitlich neben der Hauptanströmfläche ermöglicht.

Bevorzugt ist der Griffbereich als Griffmulde ausgebildet und die Griffmulde zeigt zu dem Filterkörper. Zum einen bietet die Griffmulde eine besonders einfache Möglichkeit, den Filtereinsatz aus seiner eingesetzten Position herauszunehmen. Andererseits ermöglicht die Form einer Mulde eine besonders verwirbelungsfreie Zuströmung des Fluids zu dem Filterkörper, insbesondere zu der Hauptanströmfläche und der Nebenanströmfläche.

Bei einer Ausgestaltung der Erfindung ist vorgesehen, dass in Hauptströmungsrichtung der Griffbereich im Wesentlichen nicht über die Anströmfläche hinaus ragt. Ebenfalls kann der Filterkörper im Wesentlichen quaderförmig ausgebildet sein.

Bei der weiteren Ausgestaltung ist der Filterkörper als zickzackförmig gefalteter Filterbalg ausgebildet und insbesondere eine der Stirnseiten der Filterbalgfalten (d.h. die durch den zickzackförmigen Verlauf des gefalteten Filtermediums gebildeten Seitenflächen) zeigen in Richtung des Griffbereichs. Durch die erfindungsgemäße Ausgestaltung des Griffbereichs, der zu dieser Stirnseite offen ist, wird das strömende Fluid den Stirnseiten der Filterbalgfalten zugeleitet. Bei einer einseitigen Abdichtung der Stirnseiten nur auf der Reinseite des gefalteten Filtermediums bleibt die Stirnseite teilweise an den rohseitigen, nicht verklebten Spalten zwischen den Falten offen. So kann das Fluid an der Stirnseite in das Innere des Filterbalgs gelangen, ohne dass ein Umströmen des Filterkörpers auftritt. Auf diese Weise kann neben der regulären Hauptanströmfläche, welche durch die Faltkanten gebildet wird, die Stirnseite des Filterbalgs als Nebenanströmfläche dienen und damit den Druckverlust minimieren.

Bei einer besonders bevorzugten Ausführungsform der Erfindung ist der Filtereinsatz als Sekundärfiltereinsatz ausgelegt. Da insbesondere der nach dem Hauptfiltereinsatz gelegene Bauraum besonders knapp bemessen ist und sich nicht immer eine zu der gesamten Abströmfläche des Hauptfiltereinsatz äquivalente Anströmfläche an dem Sekundärfiltereinsatz realisieren lässt, ist eine zusätzliche Nebenanströmfläche von besonders hoher Bedeutung für die Optimierung des gesamten Filtersystems.

Bei einer erfindungsgemäßen Weiterbildung der Erfindung ist vorgesehen, dass der Filtereinsatzrahmen abströmseitig ein die Abströmfläche überdeckendes Gitter aufweist. Insbesondere bei hohen Druckdifferenzen oder bei einem Wechsel des Hauptfilterelements im Betrieb ist ein besonders hoher Kollapsdruck eines Sekundärfiltereinsatzes wichtig. Diese wird durch das Vorsehen eines abströmseitigen Gitters entscheidend verbessert.

Das Gitter kann bevorzugt einteilig mit dem Filtereinsatzrahmen ausgebildet sein.

Alternativ zur einteiligen Ausführungsform des oben beschriebenen Filtereinsatzes ist es auch möglich, dass der Filtereinsatzrahmen vom (Haupt-)Filtereinsatz trennbar und damit beim Wechsel des Filtereinsatzes wiederverwendbar ist. Dazu ist bevorzugt ein wiederverwendbarer Filtereinsatzrahmen vorgesehen, der den Hauptfiltereinsatz aufnehmen kann. Dies wird im Folgenden als zweiteilige Lösung bezeichnet.

Bei dieser ist bevorzugt vorgesehen, dass die Dichtung am Filtereinsatz angeordnet und mit diesem unlösbar verbunden ist. Die Dichtung weist dabei bevorzugt im Wesentlichen im Querschnitt eine spitze Form auf, die in der bevorzugt abgeflachten Dichtfläche endet, welche axial dichtend gegen eine Dichtungsanlagefläche des Filtergehäuses anpressbar ist. Die Dichtung und die Dichtfläche befinden sich dabei weiter bevorzugt außerhalb, insbesondere radial außerhalb, der Filterkörperumhüllenden, die insbesondere durch die Grund- und Deckfläche sowie die zweite und vierte Mantelfläche definiert ist.

In einer bevorzugten Weiterbildung der zweiteiligen Lösung ist zur Verstärkung und besseren mechanischen Unterstützung der Dichtung an dem Filterrahmen am der Dichtung zugewandten Ende des Filtereinsatzrahmens ein Dichtungshalter vorgesehen, der bevorzugt einen I- oder L-Förmigen Querschnitt aufweist, wobei der erste Steg vom Filtereinsatzrahmen nach außen absteht und eine parallel zur Dichtfläche verlaufende Dichtungsabstützfläche bereitstellt, an der sich die Dichtung mit ihrer der Dichtfläche gegenüberliegenden Abstützfläche, die den Filterkörper zumindest teilweise umlaufend umgibt, abstützen kann.

Die Dichtungsabstützfläche stellt dabei den I-förmigen Querschnitt oder den ersten Schenkel des L-förmigen Querschnitts dar. Optional ist zur Ausbildung des zweiten Schenkels des L ein zweiter Steg vorgesehen, der sich vom Filtereinsatzrahmen weg erstreckt und die Dichtung außen umgibt.

In allen Ausführungsformen kann die Dichtung den Filterkörper kontaktieren oder bevorzugt durchdringen, so dass eine fluiddichte, insbesondere formschlüssige Abdichtung zwischen Filterkörper und der Dichtung entsteht.

Der Hauptfiltereinsatz der zweiteiligen Lösung weist an seiner Anströmseite bevorzugt einen außen um den Filterkörper umlaufenden Kantenschutz auf. Der Kantenschutz ist bevorzugt so ausgelegt, dass bei einem Ausklopfen des Hauptfiltereinsatzes beispielsweise zum Abreinigen Schläge gegen den Filtereinsatz aufgenommen und zumindest teilweise abgefedert werden können. So kann eine Beschädigung des Filtereinsatzes, beispielsweise des Filterkörpers, vermieden werden. Der Kantenschutz läuft weiter bevorzugt um die anströmseitige Kante des Filterelements um.
An der anströmseitigen Kante des Kantenschutzes der zweiteiligen Lösung sind auf den Langseiten (den Kanten zu Grund- und Deckfläche) jeweils mindestens eine Ausnehmung (bevorzugt zwei) vorgesehen, in welche Stützstege des Filtereinsatzrahmens insbesondere formschlüssig eingreifen können, insbesondere zur Stabilisierung des Filtereinsatzrahmens und/oder zur Positionssicherung des Filtereinsatzes.
Der Kantenschutz der zweiteiligen Lösung weist ferner, insbesondere positioniert in Einbaurichtung (Z-Richtung) zwischen den Ausnehmungen, an den Langseiten jeweils einen seitlich nach außen ragenden Vorsprung auf, die über die Außenfläche des Filterkörpers, insbesondere die Grund- und Deckfläche, überstehen. Die Vorsprünge können beim Einschieben des Filtereinsatzes in den Filtereinsatzrahmen der zweiteiligen Lösung in einer in Einschubrichtung verlaufenden Nut geführt werden. Die Nut weist weiter bevorzugt in Einschubrichtung gesehen kurz vor dem anströmseitigen Ende, d.h. einige Millimeter oder Zentimeter von der anströmseitigen Kante des Filtereinsatzrahmens beabstandet, eine die Tiefe der Nut verringernde Erhebung auf, die insbesondere so hoch ist, dass im Bereich der Erhebung die Nut vollständig oder teilweise verschwindet und sich zum anströmseitigen Ende des Filtereinsatzrahmens wieder in einem anströmseitigen Endbereich ausbildet. Die Vorsprünge und/oder die Erhebung sind dabei bevorzugt so ausgelegt, dass beim Einschieben des Filtereinsatzes in den Filtereinsatzrahmen die Erhebung insbesondere unter elastischer Verformung des Filtereinsatzes, insbesondere der Vorsprünge, überwunden werden muss, bevor die Vorsprünge weiter bevorzugt im anströmseitigen Endbereich der Nut zu liegen kommen. Dadurch kann eine lösbare, formschlüssige Verbindung des Filtereinsatzes mit dem Filtereinsatzrahmen hergestellt werden. Alternativ ist auch denkbar, die Erhebung an das Ende des Einschubwegs zu verlegen, so dass der Filtereinsatz mittels der verspannten Vorsprünge kraftschlüssig in seiner Endposition gehalten werden kann.

### Kurze Beschreibung der Zeichnungen

Die Erfindung wird nun unter Bezugnahme auf die Zeichnungen näher erläutert. Die Begriffe Filtereinsatz und Filterelement werden synonym verwendet. Es zeigen:
- Figur 1: eine perspektivische Schnittansicht einer Ausführungsform eines erfindungsgemäßen Filters mit eingesetztem Hauptfiltereinsatz und Sekundärfiltereinsatz;
- Figur 2: den Filter der Figur 1 ohne eingesetzten Sekundärfiltereinsatz;
- Figur 3: den Filter der Figur 1 ohne eingesetzten Hauptfiltereinsatz;
- Figur 4: den Filter der Figur 1 in einer Querschnittsansicht;
- Figur 5: eine perspektivische Außenansicht des erfindungsgemäßen Filters der Figur 1;
- Figur 6: eine perspektivische Ansicht eines erfindungsgemäßen Sekundärfiltereinsatzes mit Filterkör-per;
- Figur 6a: eine perspektivische Ansicht eines alternativen erfindungsgemäßen Sekundärfiltereinsatz-Fil-terkörpers;
- Figuren 7 und 8: perspektivische Ansichten des Sekundärfiltereinsatzes der Figur 6 ohne Filterkörper;
- Figur 9: eine perspektivische Schnittansicht des Filters der Figur 6;
- Figur 10: eine Schnittansicht des Filters der Figur 7;
- Figur 11: eine perspektivische Vorderansicht eines erfindungsgemäßen Hauptfiltereinsatzes;
- Figur 11a: eine perspektivische Vorderansicht einer zweiten Ausführungsform eines erfindungsgemäßen Hauptfiltereinsatzes;
- Figur 12: eine perspektivische Rückansicht des Hauptfiltereinsatzes der Figur 11;
- Figur 12a: eine perspektivische Rückansicht des Hauptfiltereinsatzes der Figur 11a in einem Trägerrahmen;
- Figur 12b: eine perspektivische Rückansicht des Hauptfiltereinsatzes der Figur 11a ohne Trägerrahmen;
- Figur 13: eine perspektivische Schnittansicht des Hauptfiltereinsatzes der Figur 11;
- Figur 13a: eine perspektivische Schnittansicht des Hauptfiltereinsatzes der Figur 11a;
- Figur 13b: eine perspektivische Schnittansicht des Trägerrahmens des Hauptfiltereinsatzes der Figur 11a;
- Figur 13c: eine Schnittansicht des Hauptfiltereinsatzes der Figur 11a in einem Trägerrahmen, wobei der Schnitt mittig, parallel zur Hauptströmungsrichtung X, senkrecht zur Anströmfläche und senkrecht zur Einbaurichtung Z durch den Hauptfiltereinsatz verläuft;
- Figur 13d: eine Schnittansicht des Hauptfiltereinsatzes der Figur 11a in einem Trägerrahmen, wobei der Schnitt mittig, parallel zur Hauptströmungsrichtung X, senkrecht zur Anströmfläche und parallel zur Einbaurichtung Z durch den Hauptfiltereinsatz verläuft;
- Figur 14: eine perspektivische Rückansicht des Hauptfiltereinsatzes der Figur 11 ohne Kantenschutz;
- Figuren 15 und 16: perspektivische Außenansicht des Filters der Figur 5 mit unterschiedlichen Stellungen des Abströmstutzens;
- Figur 17: eine Seitenansicht des Filters der Figur 5;
- Figur 18: eine Seitenansicht des Filters der Figur 15; und
- Figur 19: eine Seitenansicht des Filters der Figur 16.

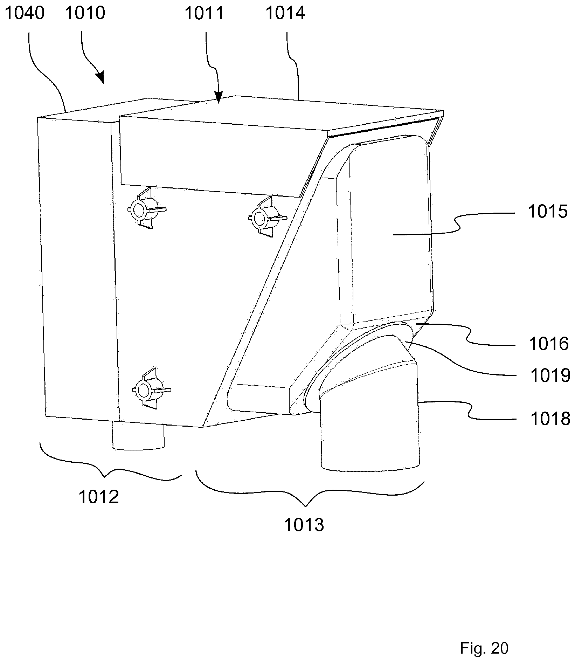

Die anhand der oben stehenden Figuren beschriebenen Ausführungsbeispiele stellen Ausdetaillierungen und Weiterentwicklungen der anhand der Figuren 20 bis 36 beschriebenen Ausführungsformen dar, wobei die durch die Weiterentwicklung hinzugefügten Merkmale vorteilhaft aber nicht zwingend erforderlich sind und auch einzeln zu einer Ausführungsform gemäß der nachstehend gezeigten Figuren hinzugefügt werden können. Dort zeigen
- Figur 20: eine perspektivische Vorderansicht;

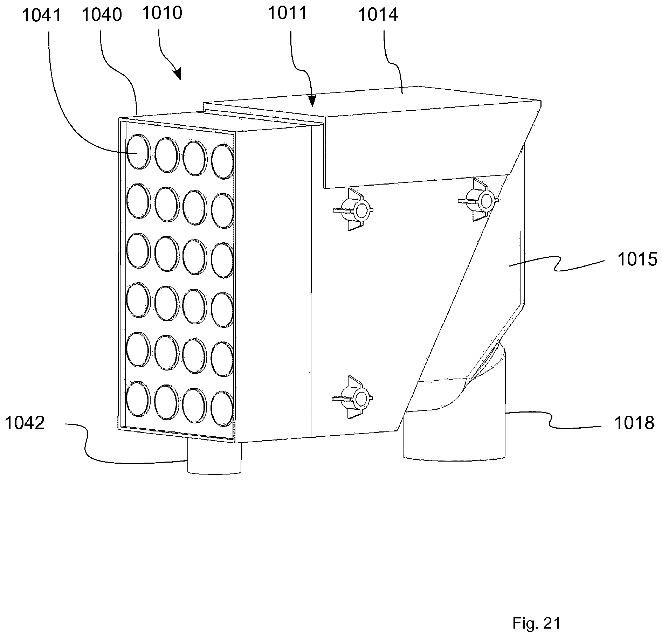

- Figur 21: eine perspektivische Rückansicht;

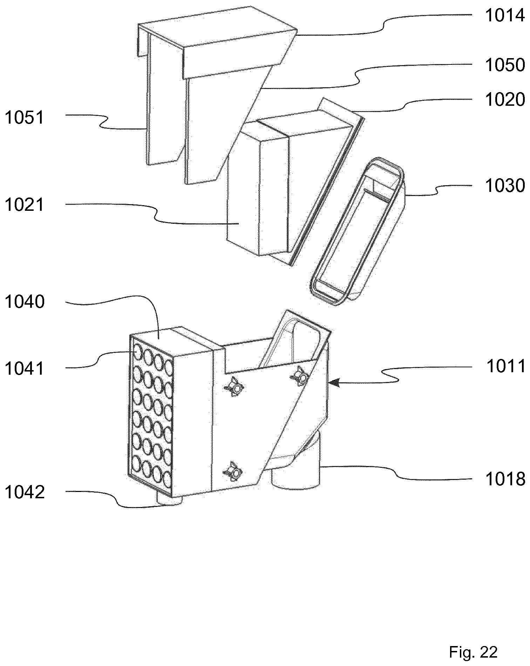

- Figur 22: eine Explosionsansicht und

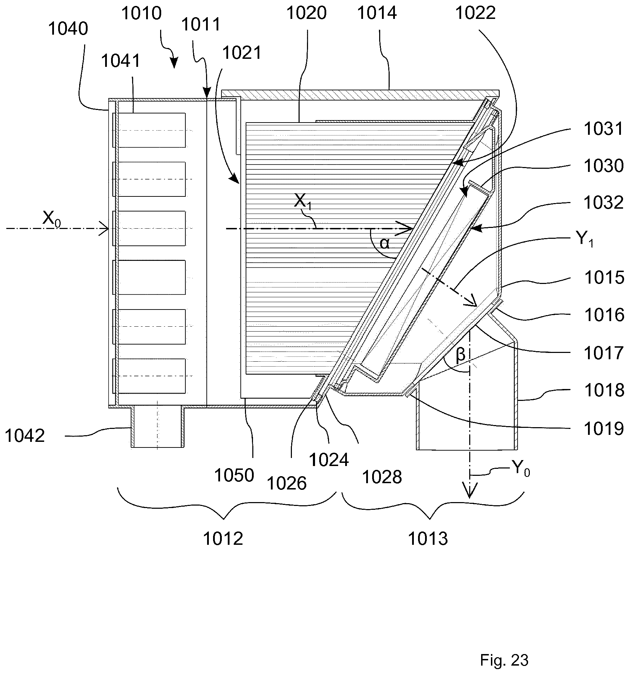

- Figur 23: eine Schnittansicht eines erfindungsgemäßen Filters;

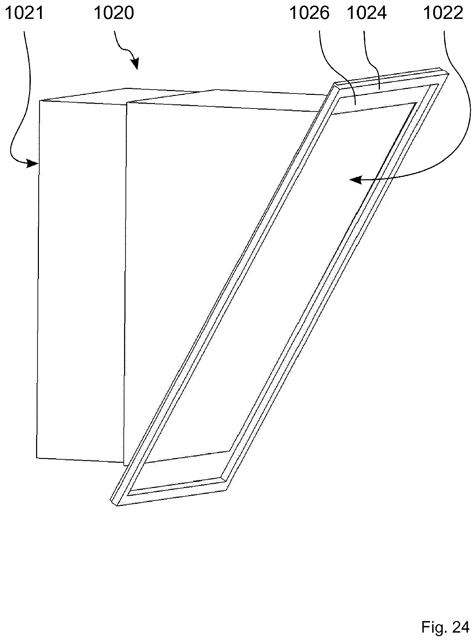

- Figur 24: eine Vorderansicht und

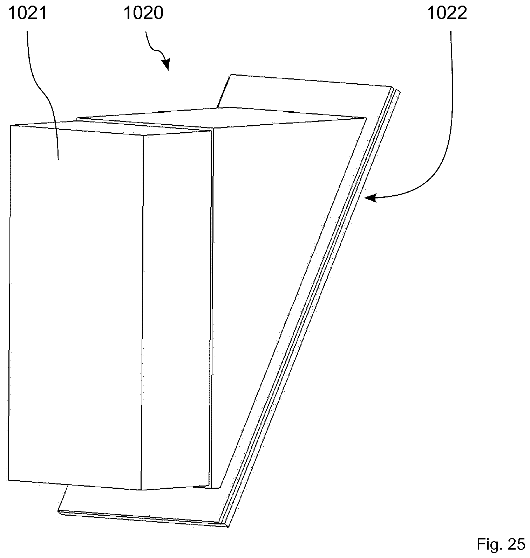

- Figur 25: eine Rückansicht eines erfindungsgemäßen Hauptfilterelements;

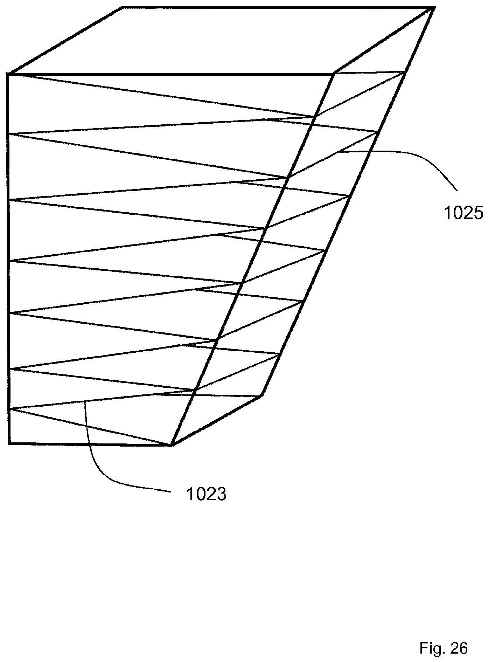

- Figur 26: eine erste Faltungsart als Skizze;

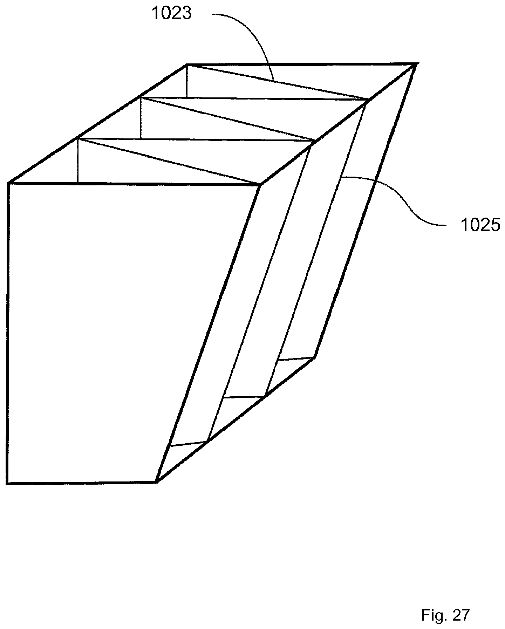

- Figur 27: eine alternative Faltungsart als Skizze;

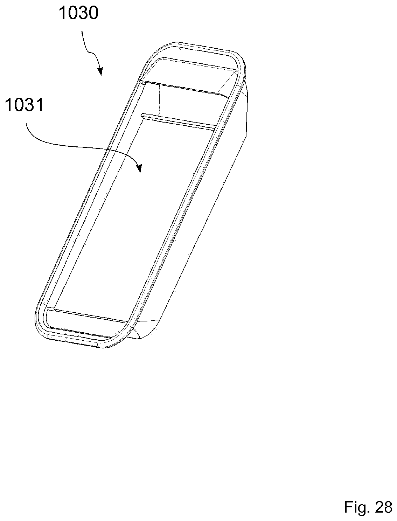

- Figur 28: eine Vorderansicht und

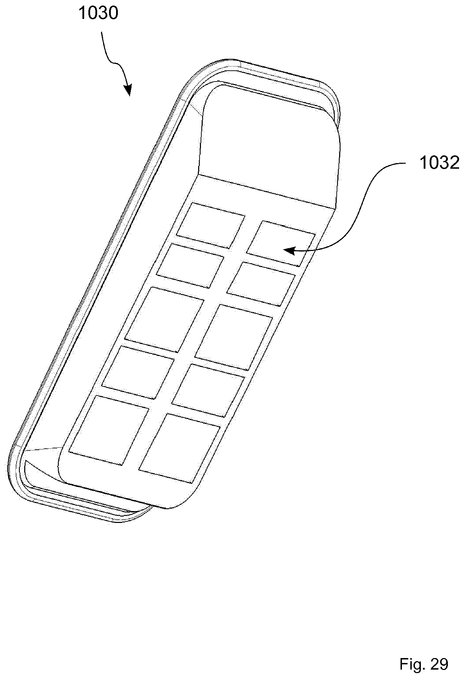

- Figur 29: eine Rückansicht eines erfindungsgemäßen Sekundärfilterelements;

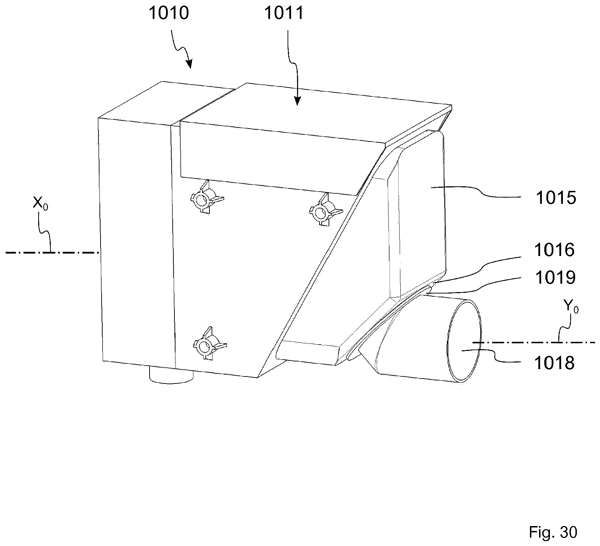

- Figur 30: den erfindungsgemäßen Filter der Figur 20 in einer zweiten Konfiguration; und

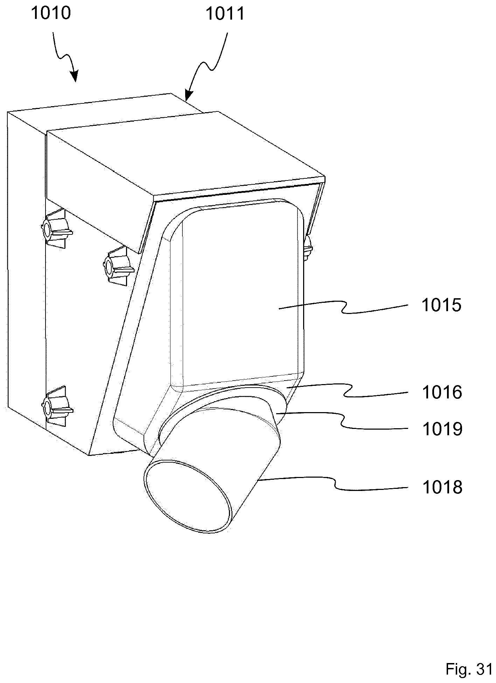

- Figur 31: den erfindungsgemäßen Filter der Figur 20 in einer dritten Konfiguration;

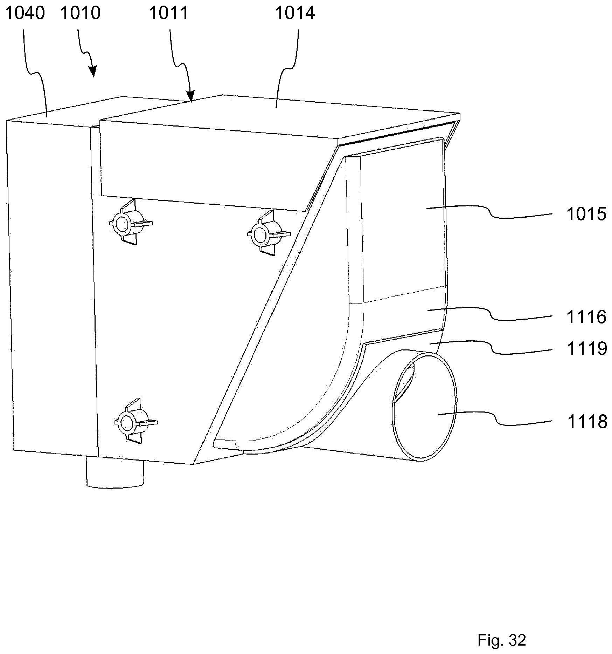

- Figur 32: eine Vorderansicht einer alternativen Ausführungsform eines erfindungsgemäßen Filters;

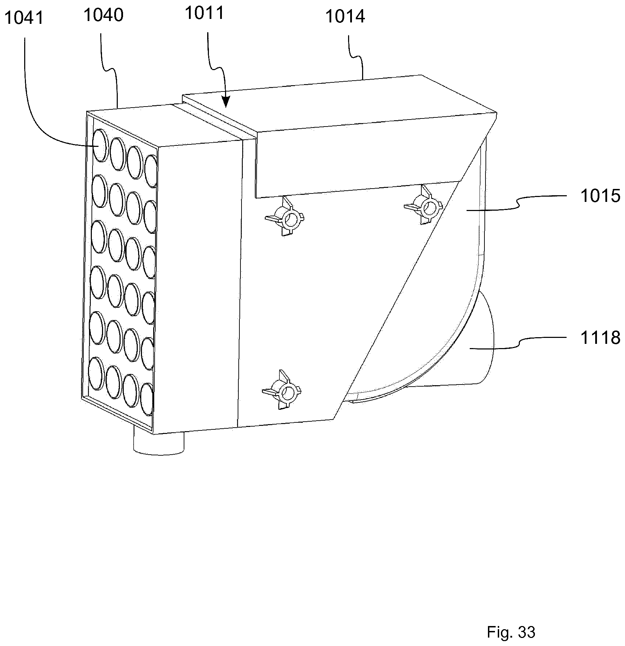

- Figur 33: eine Rückansicht;

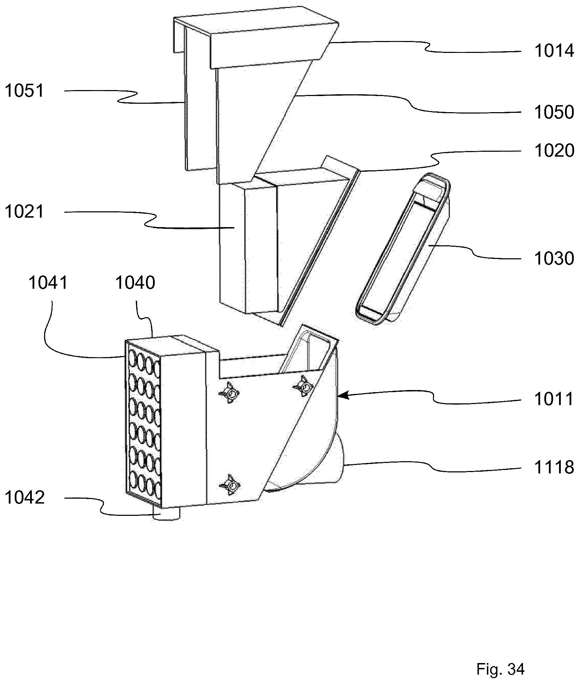

- Figur 34: eine Explosionsansicht und

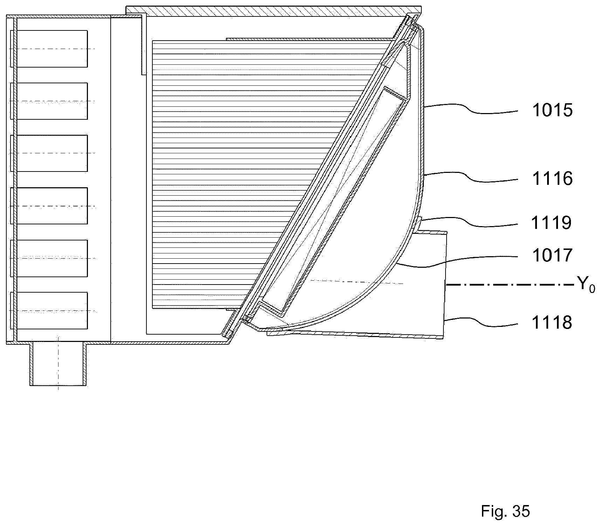

- Figur 35: eine Schnittansicht des Filters der Figur 32.

### Ausführungsform(en) der Erfindung

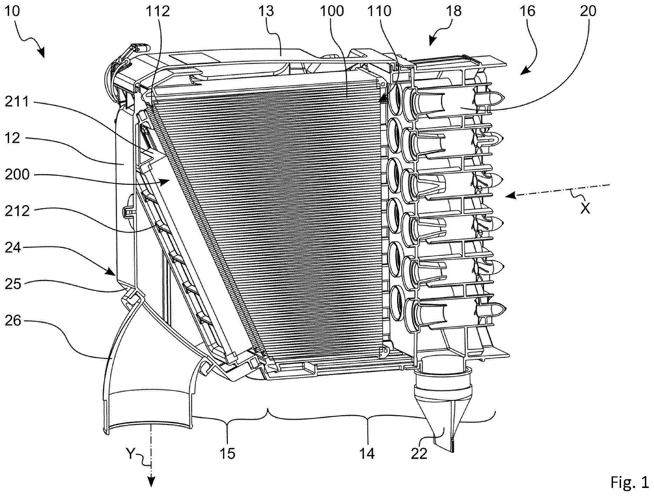

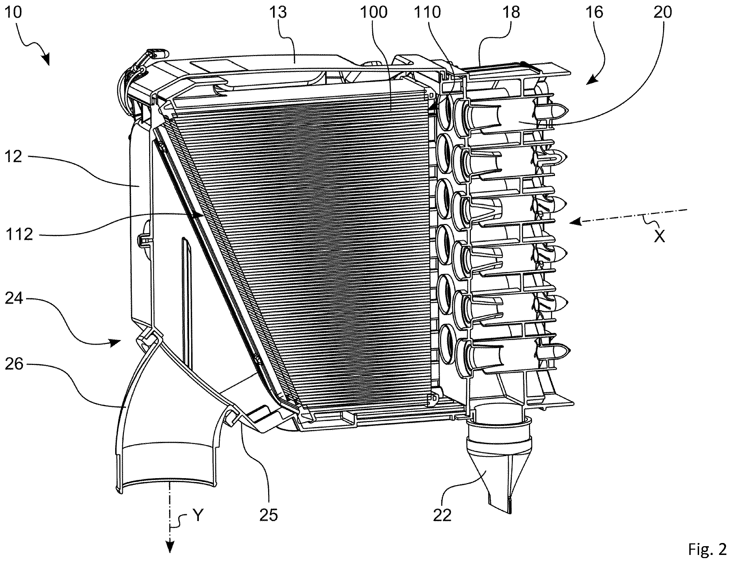

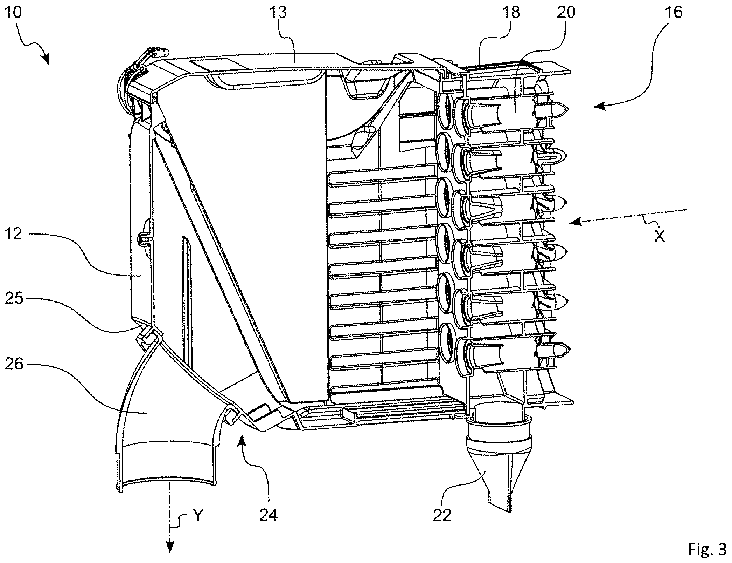

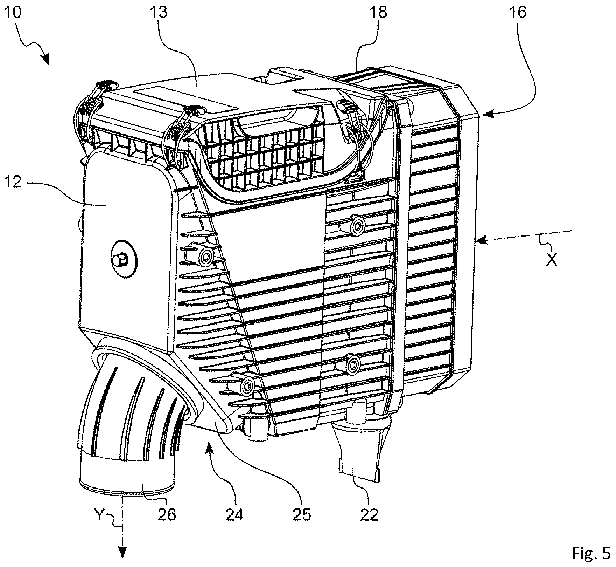

Es wird nun unter Bezugnahme auf die Figuren 1 bis 5 eine Ausführungsform eines erfindungsgemäßen Filters 10 beschrieben. Ein solcher Filter 10 kann beispielsweise in einem Luftansaugtrakt einer Bau- oder Landmaschine, eines Kompressors oder eines sonstigen Geräts mit einer Brennkraftmaschine zur Filterung eines Fluids, insbesondere von Luft, eingesetzt werden. Der Filter 10 weist ein Filtergehäuse 12 auf, das sich grob in einen rohseitigen Bereich 14 und einen reinseitigen Bereich 16 aufgliedern lässt.

Der Filter 100 wird entlang einer Hauptanströmrichtung X durchströmt. Auf einer Anströmseite 16 trifft das zu filternde Fluid auf ein Grob- oder Vorabscheidermodul 18, das vorliegend als Zyklonblock ausgebildet ist. In dem Zyklonblock 18 sind eine Vielzahl einzelner Vorabscheiderzellen 20 in einem sogenannten Multi-Zyklonblock parallel geschaltet. In dem Zyklonblock 18 vorabgeschiedener Staub und/oder Wasser wird durch einen Austragsstutzen 22 aus dem Filtergehäuse 12 entfernt.

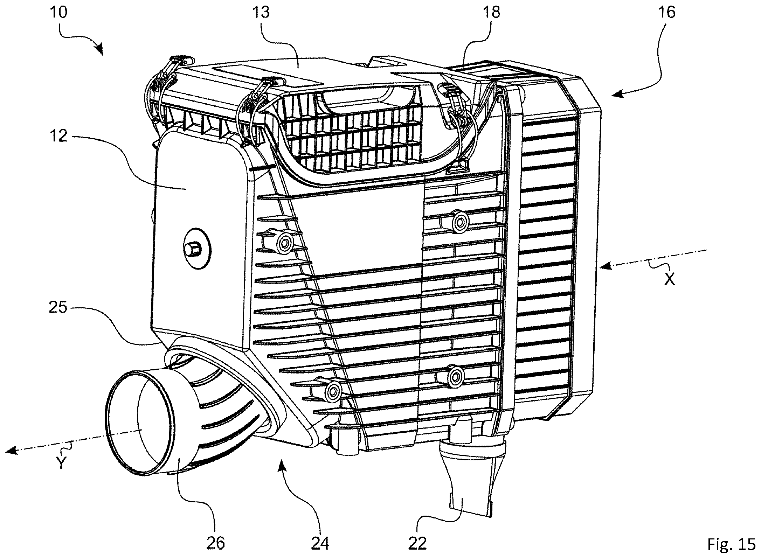

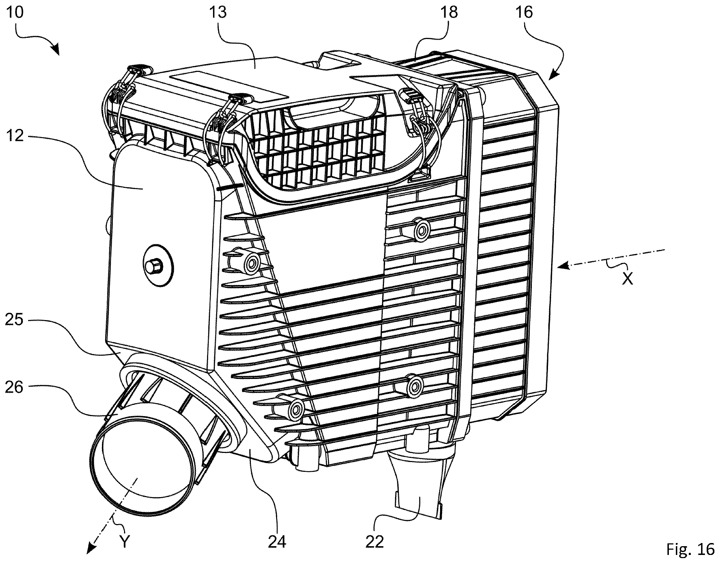

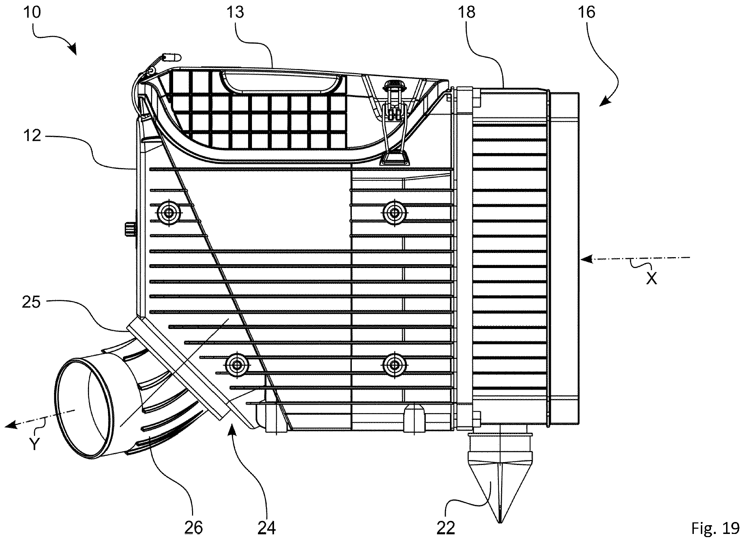

Nach dem Zyklonblock 18 gelangt das zu filternde Fluid in den Hauptfiltereinsatz 100. Der Hauptfiltereinsatz 100 ist vorliegend prismatisch ausgebildet. Eine Anströmfläche 110 des Hauptfiltereinsatzes 100 liegt nicht parallel zu einer Abströmfläche 112 des Hauptfiltereinsatzes 100. Vielmehr schließen die Anströmfläche 110 und die Abströmfläche 112 einen Winkel ein. Vorliegend ist die Anströmfläche 110 des Hauptfiltereinsatzes 100 hinsichtlich ihrer angestrebten Fläche kleiner als die Abströmfläche 112 des Hauptfiltereinsatzes 100. Abströmseitig des Hauptfiltereinsatzes 100 ist in dem Filtergehäuse 12 ein Sekundärfiltereinsatz 200 vorgesehen. Eine Hauptanströmfläche 210 des Sekundärfilterelements 200 ist auf die Abströmfläche 112 des Hauptfiltereinsatzes 100 ausgerichtet und insbesondere parallel zu dieser angeordnet. Eine Abströmfläche 212 ist in dieser Ausführungsform parallel zu der Hauptanströmfläche 210 des Sekundärfiltereinsatzes 200 ausgerichtet. Aufgrund der Neigung der Abströmfläche 112 des Hauptfiltereinsatzes 100 findet bereits bei der Anströmung des Fluids aus dem Hauptfiltereinsatz 100, aber auch bei der Anströmung aus dem Sekundärfiltereinsatz 200 eine Ablenkung der Hauptströmungsrichtung X statt. Durch die Abströmungsgeometrie des Filtergehäuses 12 im Abströmbereich 24 wird das strömende Fluid auf die Abströmungsrichtung Y um- und zu einem Abströmstutzen 26 gelenkt. Vorliegend ist die Hauptabströmungsrichtung Y im Wesentlichen senkrecht zur Hauptanströmungsrichtung X. Es sind aber auch andere Abströmungsrichtungen denkbar. Dies wird insbesondere im Zusammenhang mit den Figuren 15 bis 19 näher erläutert.

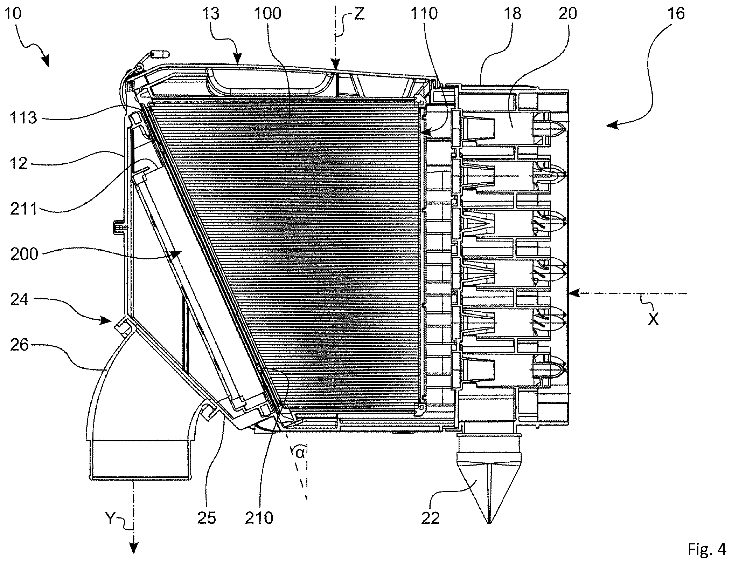

Der Hauptfiltereinsatz 100 weist eine Hauptfiltereinsatz-Anströmfläche 110, eine Hauptfiltereinsatz-Strömungsrichtung X1, eine Hauptfiltereinsatz-Abströmfläche 112 sowie eine auf einer Dichtfläche 114 angeordnete Dichtung 116 zur fluiddichten Trennung des rohseitigen Bereichs 14 und des reinseitigen Bereichs 16 des Filtergehäuses 12 auf. Stromabwärts des Hauptfiltereinsatzes 100 ist ein Sekundärfiltereinsatz 200 mit einer Sekundärfiltereinsatz-Anströmfläche 210, einer Sekundärfiltereinsatz-Strömungsrichtung Y1 und einer Sekundärfiltereinsatz-Abströmfläche 212 angeordnet. Die Dichtfläche 114 des Hauptfiltereinsatzes 100 ist schräg zur Hauptströmungsrichtung Y1 des Hauptfiltereinsatzes 100 angeordnet. Insbesondere ist die Dichtfläche 114 unter einem Winkel α angeordnet, der bevorzugt zwischen 5° und 45° beträgt (siehe Figur 4), Insbesondere beträgt der Winkel 24°±10° und 24°±5°. In der vorliegenden Ausführungsform beträgt der Winkel α 24° (siehe Figur 4).

Die Sekundärfiltereinsatz-Anströmfläche 210 verläuft im Wesentlichen parallel und beabstandet zu der Dichtfläche 114 des Hauptfiltereinsatzes 100. Der Abstand beträgt weniger als 2 cm, in der vorliegenden Ausführungsform beträgt der Abstand 1 cm.

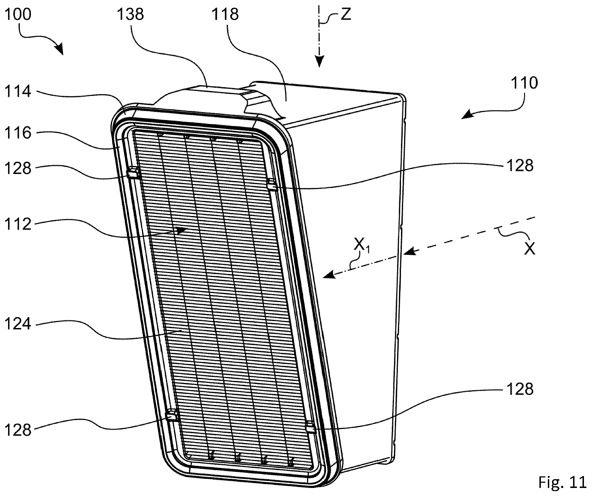

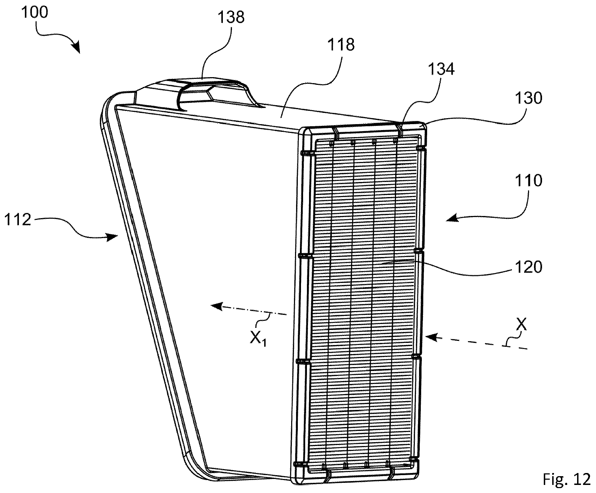

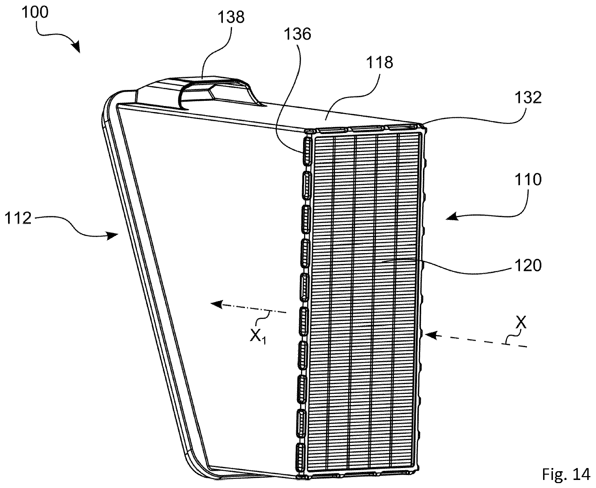

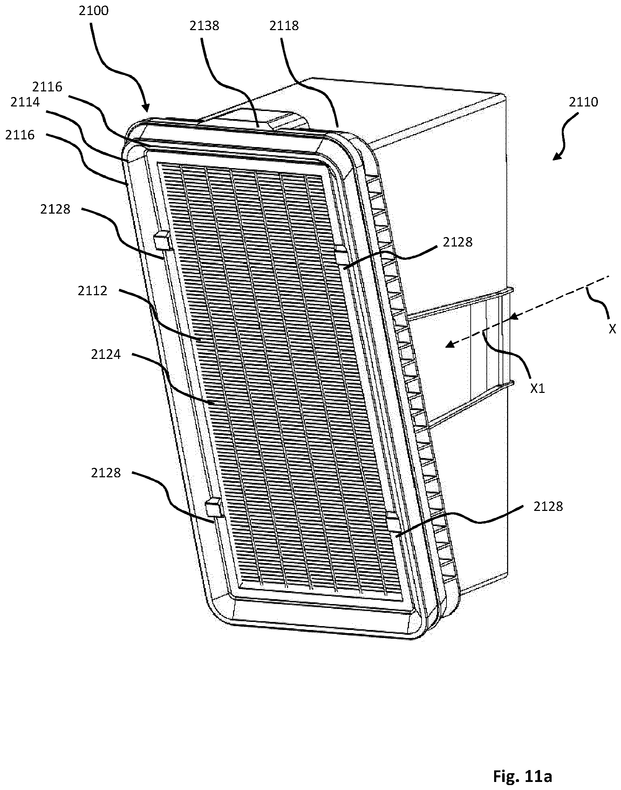

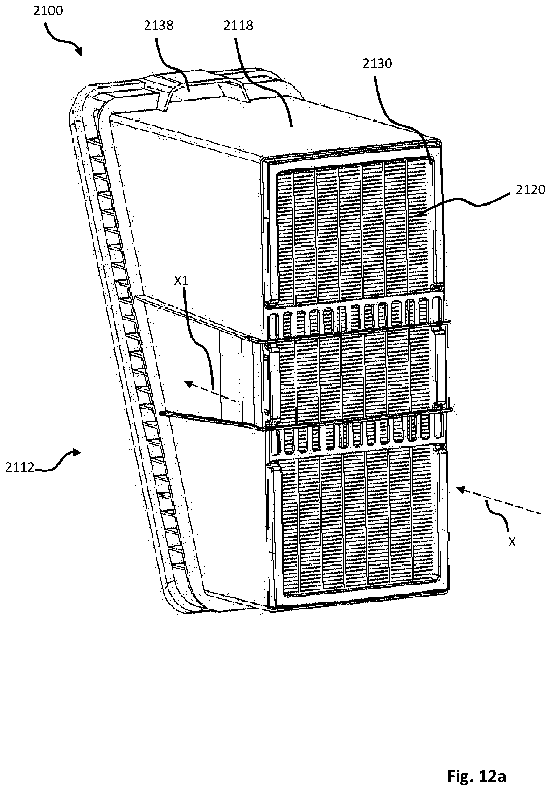

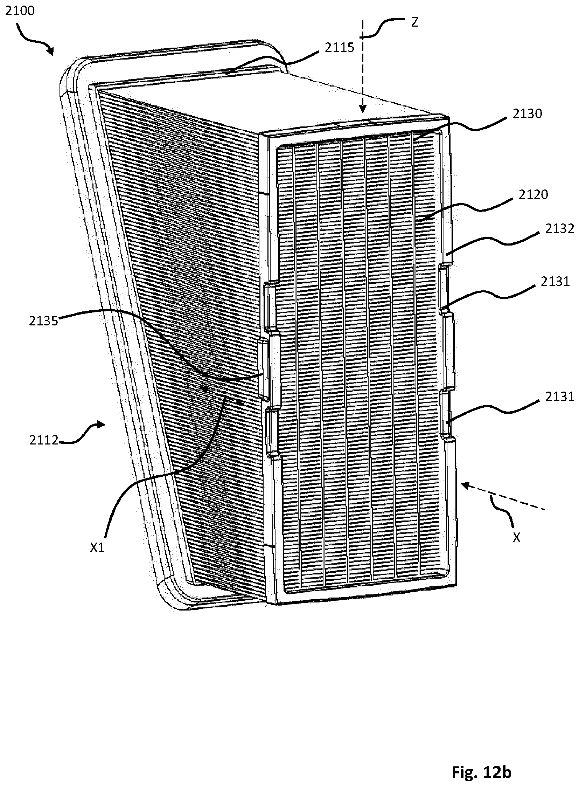

Die Figuren 11 bis 14 zeigen den Hauptfiltereinsatz 100. Der Hauptfiltereinsatz 100 weist eine Anströmfläche 110 (erste Mantelfläche) und eine Abströmfläche 112 (dritte Mantelfläche) auf. Der Pfeil für die Einführrichtung Z zeigt in Fig. 11 auf die zweite Mantelfläche, die der kleineren vierten Mantelfläche gegenüberliegt. Die Deckfläche ist in Fig. 11 und 12 erkennbar als die Fläche, auf der die Markierung für die Hauptdurchströmungsrichtung X1 angeordnet ist. Dieser liegt parallel und deckungsgleich der Grundfläche gegenüber. Grund- und Deckfläche sowie die zweite und vierte Mantelfläche sind zur ersten Mantelfläche (Anströmfläche 110) senkrecht ausgerichtet. Der Hauptfiltereinsatz 100 wird entlang einer Hauptanströmungsrichtung X angeströmt und entlang einer Hauptdurchströmungsrichtung X1 durchströmt. Der Hauptfiltereinsatz 100 weist einen Filtereinsatzrahmen 118 auf, der einen Filterkörper 120 aufnimmt. Der Filterkörper 120 ist vorliegend als Faltenbalg ausgebildet. Anströmseitige Faltkanten 122 liegen gegenüber abströmseitigen Faltkanten 124. Anströmseitige Faltkanten 122 und abströmseitige Faltkanten 124 liegen parallel, im Wesentlichen senkrecht zur Hauptdurchströmungsrichtung X1 und in den Figuren 11 bis 14 im Wesentlichen waagrecht. Diese Orientierung der Faltkanten 122, 124 erlaubt eine Variation der Faltentiefe in Richtung einer Einführrichtung Z. Entlang der Einführrichtung Z ist der Hauptfiltereinsatz 100 in das Filtergehäuse 12 des Filters 10 einführbar. In dem vorliegenden Ausführungsbeispiel verringert sich die Faltenhöhe entlang der Einführrichtung Z. Dies bewirkt eine Verkippung der Anströmfläche 110 gegenüber der Abströmfläche 112.

Im Bereich der Abströmfläche 110 weist der Filterrahmen 118 eine Dichtfläche 114 auf, entlang der eine umlaufende Dichtung 116 vorgesehen ist. Die Dichtung dient zur Trennung des rohseitigen Bereichs 14 von dem reinseitigen Bereich 16 in dem Filtergehäuse 12 des Filters 10, wenn der Hauptfiltereinsatz 100 in den Filter 10 eingesetzt ist. Die Dichtung 112 weist im Wesentlichen im Querschnitt eine U-Form auf. Zur Verstärkung und besseren mechanischen Anbindung der Dichtung 116 an den Filterrahmen 118 ist ein Steg 126 vorgesehen, der in die U-Form der Dichtung 116 eingreift. Gleichzeitig kann die Dichtung 116 den Filterkörper 120 kontaktieren oder durchdringen, so dass gleichzeitig eine Verklebung des Filterkörpers 120 mit dem Filtereinsatzrahmen 118 und eine fluiddichte Abdichtung zwischen Filterkörper 120 und Filtereinsatzrahmen 118 entsteht.

Des Weiteren weist die Dichtung 116 eine vorliegend als Abstütznoppen 128 ausgebildete Abstandsstruktur auf. Die Abstütznoppen 128 sind Bestandteil des Dichtungsmaterials der Dichtung 116. Wie aus der Querschnittsansicht der Figur 4 erkennbar ist, kontaktieren die Abstütznoppen 128 den Sekundärfiltereinsatz 200, insbesondere einen Sekundärfiltereinsatzrahmen, wenn Hauptfiltereinsatz 100 und Sekundärfiltereinsatz 200 in dem Filtergehäuse 12 des Filters 10 eingesetzt sind. In diesem Zustand kann der Sekundärfiltereinsatz 200 auch bei einer Vibrationsanregung, die beispielsweise durch das Filtergehäuse 12 übertragen werden kann, sich nicht aus einem Dichtsitz im Filtergehäuse 12 bewegen. Außerdem wird durch die Abstütznoppen 128 sichergestellt, dass der Sekundärfiltereinsatz 200 nach dem Einbau des Hauptfiltereinsatzes 100 und dem Verschließen des Deckels 13 an der richtigen Position im Filtergehäuse 12 sitzt.

Die Abstütznoppen 128 sind mehrfach entlang der Dichtung 116 an der der Abströmfläche 112 zugewandten Seite angeordnet. Sie können beispielsweise integral mit der Dichtung 116 bei der Herstellung der Dichtung 116 hergestellt werden.

Die Dichtung 116 befindet sich an der Abströmfläche 112 des Hauptfiltereinsatzes 100 und wirkt in eine Richtung, die senkrecht zur Abströmfläche 112 liegt, also im Wesentlichen axial entlang der Hauptdurchströmungsrichtung X1.

Der Hauptfiltereinsatz 100 weist an seiner Anströmseite 110 einen außen um den Filterrahmen 118 umlaufenden Kantenschutz 130 auf. Der Kantenschutz 130 ist so ausgelegt, dass bei einem Ausklopfen des Hauptfiltereinsatzes 100 beispielsweise zum Abreinigen Schläge gegen den Filterrahmen 118 aufgenommen und zumindest teilweise abgefedert werden können. So kann ein Brechen des Filterrahmens 118 oder eine anderweitige Beschädigung des Filtereinsatzes 100, beispielsweise des Filterkörpers 120, vermieden werden. Der Kantenschutz 130 läuft um die anströmseitige Kante des Filterelements 100 um. Dabei können einzelne Unterbrechungen, wie beispielsweise die Einkerbungen 134 vorgesehen sein. Die Einkerbungen 134 entstehen bei der Herstellung des Kantenschutzes 130. Dabei liegt der Filterrahmen 118 samt Filterkörper 120 in einer Gussschale. Stege halten dabei einen Abstand zwischen dem Gussschalenboden und dem Filterkörper 118 und lassen dabei die Einkerbungen 134 während des Gussvorgangs entstehen.

An der anströmseitigen Kante 132 sind Ausnehmungen 136 vorgesehen. Die Ausnehmungen 136 durchbrechen die Seitenwände des Filterrahmens 118 und erstrecken sich somit senkrecht zur Hauptdurchströmungsrichtung X1. Während des bereits erwähnten Gussvorgangs durchdringt das Gussmaterial für den Kantenschutz 130 die Ausnehmungen 136, kontaktiert die Innenwände des Filtereinsatzrahmens 118 und insbesondere den Filterkörper 120. Es entsteht damit eine fluiddichte Abdichtung zwischen dem Filterkörper 120 und dem Filtereinsatzrahmen 118 und gleichzeitig eine Verklebung der beiden Bauteile. Es ist somit der Kantenschutz 130 einteilig mit der Verklebung zwischen dem Filterkörper 120 und dem Filtereinsatzrahmen 118 und einer ebenfalls notwendigen Abdichtung zwischen den beiden Bauteilen hergestellt. Der Kantenschutz 130 kann beispielsweise aus einem schäumbaren Polyurethan hergestellt sein. Es sind aber auch silikonbasierte Materialsysteme denkbar.

Der Filtereinsatz 100 weist einen Griff 138 auf. Der Griff 138 wirkt mit dem Deckel 13 des Filters 10 zusammen und sorgt für einen sicheren Sitz des Hauptfiltereinsatzes 100 in dem Filtergehäuse 12 und übt gleichzeitig einen axial in Richtung der Hauptströmungsrichtung X1 gerichteten Druck auf die Dichtung 116 aus und sorgt somit für einen festen Dichtsitz des Hauptfiltereinsatzes 100 in dem Filtergehäuse 12.

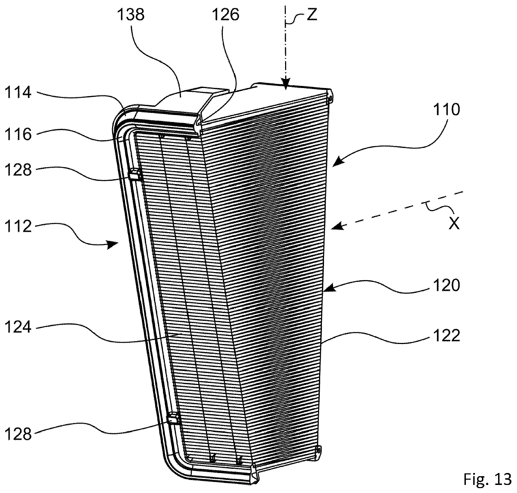

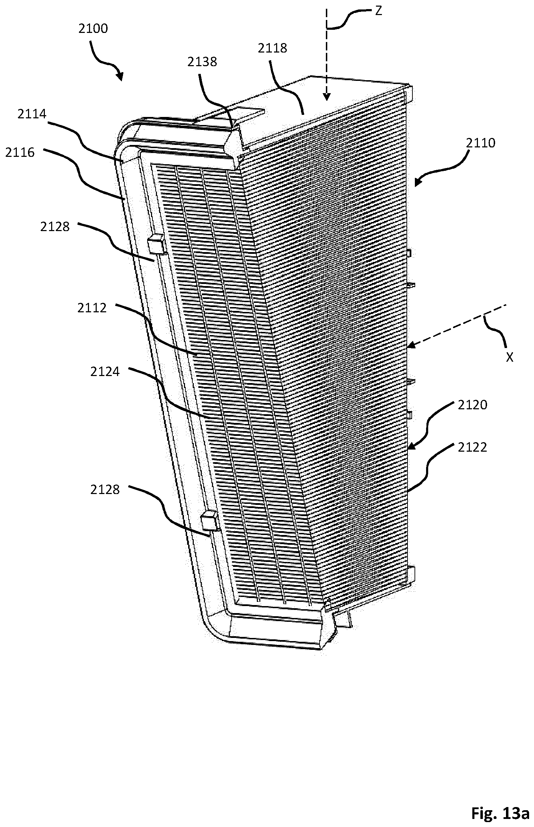

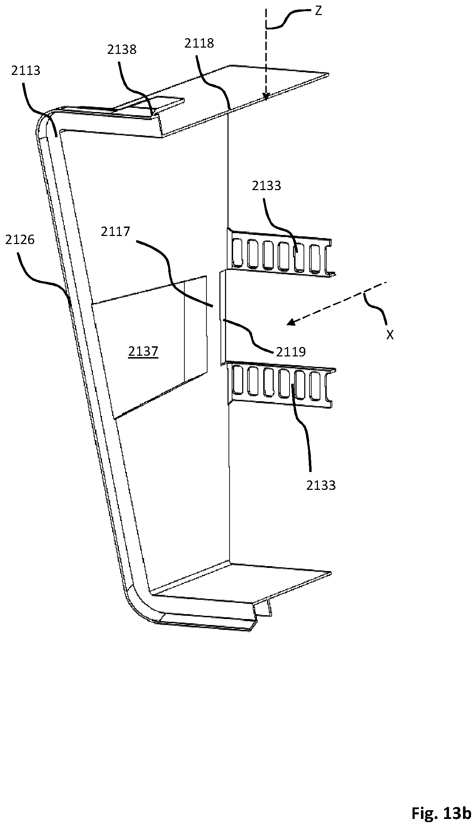

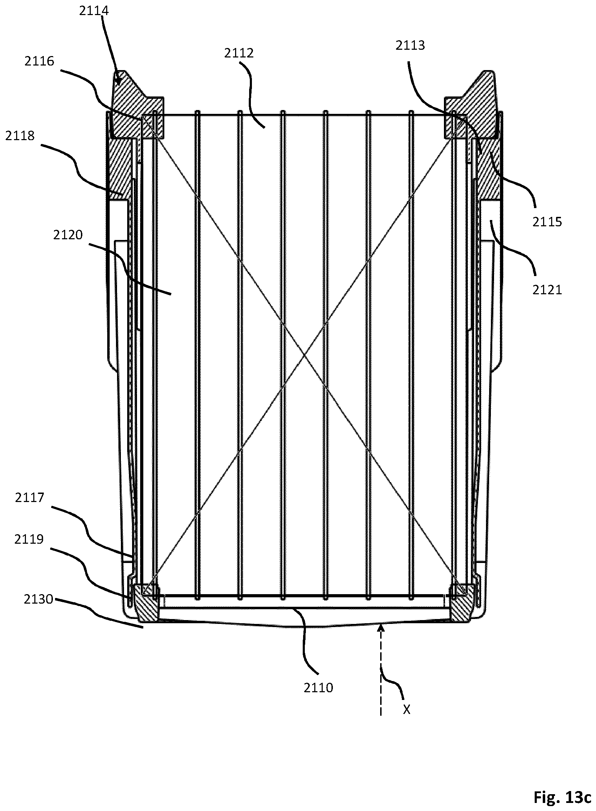

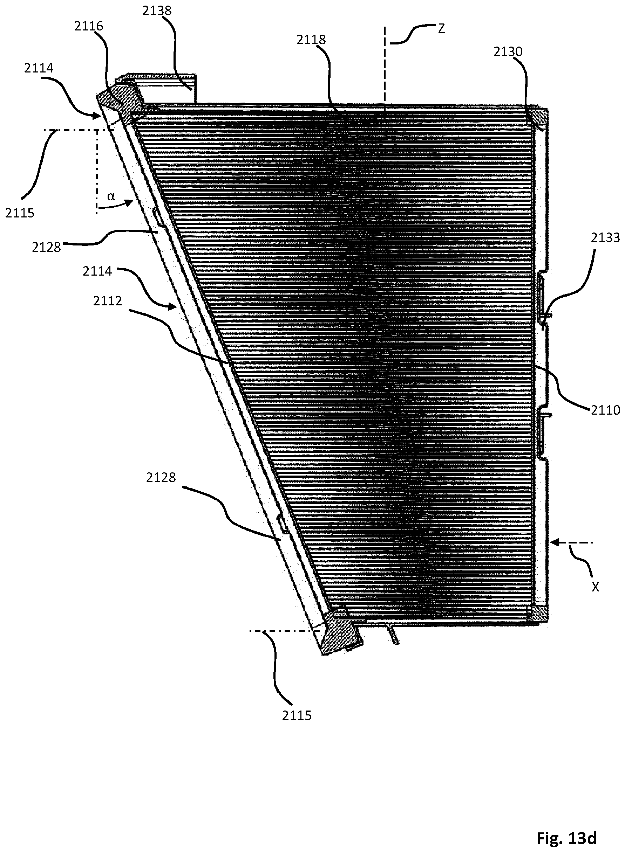

Die Figuren 11a, 12a, 12b und 13a bis 13d zeigen eine Variante 2100 des Hauptfiltereinsatzes 100, bei welcher der Filtereinsatzrahmen 2118 lösbar und wiederverwendbar mit dem Filtereinsatz 2100 verbunden ist. Die äußere, als Keilstumpf erkennbare Form entspricht der Form der einteiligen Ausführungsform der Figuren 11 bis 14. Der wesentliche Unterschied zur einteiligen Ausführungsform ist, dass der Filtereinsatzrahmen 2118 vom (Haupt-)Filtereinsatz 2100 trennbar und damit beim Wechsel des Filtereinsatzes 2100 wiederverwendbar ist. Der Hauptfiltereinsatz 2100 weist eine Anströmfläche 2110 und eine Abströmfläche 2112 auf. Der Hauptfiltereinsatz 2100 wird entlang einer Hauptanströmungsrichtung X angeströmt und entlang einer Hauptdurchströmungsrichtung X1 durchströmt. Der Hauptfiltereinsatz 2100 weist einen Filtereinsatzrahmen 2118 auf, der den Hauptfiltereinsatz 2100 aufnimmt. Der Filterkörper 2120 ist vorliegend als Faltenbalg ausgebildet. Anströmseitige Faltkanten 2122 liegen gegenüber abströmseitigen Faltkanten 2124. Anströmseitige Faltkanten 2122 und abströmseitige Faltkanten 2124 liegen parallel, im Wesentlichen senkrecht zur Hauptdurchströmungsrichtung X1 und in den Figuren 11a, 12a, 12b, und 13a bis 13d im Wesentlichen waagrecht. Diese Orientierung der Faltkanten 2122, 2124 erlaubt eine Variation der Faltentiefe in Richtung einer Einführrichtung Z. Entlang der Einführrichtung Z ist der Hauptfiltereinsatz 2100 alternativ zum Hauptfiltereinsatz 100 in das Filtergehäuse 12 des Filters 10 (siehe Fig. 1 bis 5) in gleicher Weise einführbar. In dem vorliegenden Ausführungsbeispiel verringert sich die Faltenhöhe ebenfalls entlang der Einführrichtung Z. Dies bewirkt eine Verkippung der Anströmfläche 2110 gegenüber der Abströmfläche 2112 um den Winkel α (Fig. 13d).

Im Bereich der Abströmfläche 2110 weist der Filtereinsatz 2100 eine Dichtfläche 114 auf, die entlang einer umlaufenden Dichtung 2116 vorgesehen ist. Die Dichtung dient zur Trennung des rohseitigen Bereichs 14 von dem reinseitigen Bereich 16 in dem Filtergehäuse 12 des Filters 10, wenn der Hauptfiltereinsatz 2100 in den Filter 10 eingesetzt ist. Die Dichtung 2116 weist im Wesentlichen im Querschnitt eine spitze Form auf, die in der bevorzugt abgeflachten Dichtfläche 2114 endet, welche axial dichtend gegen eine Dichtungsanlagefläche des Filtergehäuses 12 anpressbar ist. Die Dichtung 2116 und die Dichtfläche 2114 befinden sich außerhalb, insbesondere radial außerhalb, der Filterkörperumhüllenden 2115, die durch die Grund- und Deckfläche sowie die zweite und vierte Mantelfläche definiert ist. Dadurch wird sichergestellt, dass auch bei Stömungsumlenkung stromab des Hauptfiltereinsatzes 2100 keine Behinderung der Strömung durch die Dichtung 2116 stattfindet.

Zur Verstärkung und besseren mechanischen Unterstützung der Dichtung 2116 ist an dem Filterrahmen 2118 ist am der Dichtung 2116 zugewandten Ende des Filtereinsatzrahmens 2118 ein Dichtungshalter vorgesehen, der bevorzugt einen L-Förmigen Querschnitt aufweist, wobei der erste Steg vom Filtereinsatzrahmen 2118 nach außen absteht und eine parallel zur Dichtfläche 2114 verlaufende Dichtungsabstützfläche 2113 bereitstellt, an der sich die Dichtung 2116 mit ihrer der Dichtfläche 2114 gegenüberliegenden Abstützfläche 2115, die den Filterkörper 2120 zumindest teilweise umlaufend umgibt, abstützen kann. Die Dichtungsabstützfläche 2113 stellt dabei den ersten Schenkel des L-förmigen Querschnitts dar. Ferner ist zur Ausbildung des zweiten Schenkels des L ein zweiter Steg 2126 vorgesehen, der sich vom Filtereinsatzrahmen 2118 weg erstreckt und die Dichtung 2116 außen umgibt. Gleichzeitig kann die Dichtung 2116 den Filterkörper 2120 kontaktieren oder durchdringen, so dass eine fluiddichte Abdichtung zwischen Filterkörper 2120 und der Dichtung 2116 entsteht.

Des Weiteren weist die Dichtung 2116 ebenfalls analog zur ersten Ausführungsform eine vorliegend als Abstütznoppen 2128 ausgebildete Abstandsstruktur auf. Die Abstütznoppen 2128 sind Bestandteil des Dichtungsmaterials der Dichtung 2116. Analog zur Querschnittsansicht der Figur 4 kontaktieren auch die Abstütznoppen 2128 den Sekundärfiltereinsatz 200, insbesondere einen Sekundärfiltereinsatzrahmen, wenn Hauptfiltereinsatz 2100 und Sekundärfiltereinsatz 200 in dem Filtergehäuse 12 des Filters 10 eingesetzt sind. In diesem Zustand kann der Sekundärfiltereinsatz 200 auch bei einer Vibrationsanregung, die beispielsweise durch das Filtergehäuse 12 übertragen werden kann, sich nicht aus einem Dichtsitz im Filtergehäuse 12 bewegen. Außerdem wird durch die Abstütznoppen 2128 sichergestellt, dass der Sekundärfiltereinsatz 200 nach dem Einbau des Hauptfiltereinsatzes 100 und dem Verschließen des Deckels 13 an der richtigen Position im Filtergehäuse 12 sitzt.

Die Abstütznoppen 2128 sind mehrfach entlang der Dichtung 2116 an der der Abströmfläche 2112 zugewandten Seite angeordnet. Sie können beispielsweise integral mit der Dichtung 2116 bei der Herstellung der Dichtung 2116 hergestellt werden.

Die Dichtung 2116 befindet sich an der Abströmfläche 2112 des Hauptfiltereinsatzes 2100 und wirkt in eine Richtung, die senkrecht zur Abströmfläche 2112 liegt, also im Wesentlichen axial entlang der Hauptdurchströmungsrichtung X1 und/oder entsprechend der Winkelstellung der Abströmfläche.

Der Hauptfiltereinsatz 2100 weist an seiner Anströmseite 2110 einen außen um den Filterkörper 2120 umlaufenden Kantenschutz 2130 auf. Der Kantenschutz 2130 ist so ausgelegt, dass bei einem Ausklopfen des Hauptfiltereinsatzes 2100 beispielsweise zum Abreinigen Schläge gegen den Filtereinsatz 2100 aufgenommen und zumindest teilweise abgefedert werden können. So kann eine Beschädigung des Filtereinsatzes 2100, beispielsweise des Filterkörpers 2120, vermieden werden. Der Kantenschutz 2130 läuft um die anströmseitige Kante des Filterelements 2100 um. Dabei können analog zum vorherigen Ausführungsbeispiel einzelne Unterbrechungen, wie beispielsweise die Einkerbungen 134 vorgesehen sein (hier nicht gezeigt). Die Einkerbungen 134 entstehen bei der Herstellung des Kantenschutzes 2130. Dabei liegt der Filterkörper 2120 in einer Gussschale. Stege halten dabei einen Abstand zwischen dem Gussschalenboden und dem Filterkörper 2120 und lassen dabei die Einkerbungen 134 während des Gussvorgangs entstehen.

An der anströmseitigen Kante 2132 des Kantenschutzes sind auf den Langseiten (den Kanten zu Grund-und Deckfläche) jeweils mindestens eine Ausnehmung 2131 (bevorzugt zwei wie gezeigt) vorgesehen, in welche Stützstege 2133 des Filtereinsatzrahmens 2118 insbesondere formschlüssig eingreifen, insbesondere zur Stabilisierung des Filtereinsatzrahmens und/oder zur Positionssicherung des Filtereinsatzes 2100. Der Kantenschutz 2130 weist ferner, insbesondere positioniert in Einbaurichtung (Z-Richtung) zwischen den Ausnehmungen 2131, an den Langseiten jeweils einen seitlich nach außen ragenden Vorsprung 2135 auf, die über die Außenfläche des Filterkörpers 2120, insbesondere die Grund- und Deckfläche, überstehen. Die Vorsprünge können beim Einschieben des Filtereinsatzes 2100 in den Filtereinsatzrahmen 2118 in einer in Einschubrichtung, d.h. in entgegen der Durchströmungsrichtung X, verlaufenden Nut 2137 geführt werden. Die Nut 2137 weist in Einschubrichtung gesehen kurz vor dem anströmseitigen Ende, d.h. einige Millimeter oder Zentimeter von der anströmseitigen Kante des Filtereinsatzrahmens beabstandet, eine die Tiefe der Nut 2137 verringernde Erhebung 2117 auf, die insbesondere so hoch ist, dass im Bereich der Erhebung 2117 die Nut 2137 vollständig oder teilweise verschwindet und sich zum anströmseitigen Ende des Filtereinsatzrahmens wieder in einem anströmseitigen Endbereich 2119 ausbildet. Beim Einschieben des Filtereinsatzes 2100 in den Filtereinsatzrahmen muss diese Erhebung 2117 insbesondere unter elastischer Verformung des Filtereinsatzes 2100, insbesondere der Vorsprünge 2135, überwunden werden, bevor die Vorsprünge 2135 im anströmseitigen Endbereich 2119 der Nut 2137 zu liegen kommen. Dadurch kann eine lösbare, formschlüssige Verbindung des Filtereinsatzes 2100 mit dem Filtereinsatzrahmen 2118 hergestellt werden.

Der Filtereinsatzrahmen 2118 weist ebenfalls analog zur ersten Ausführungsform einen Griff 2138 auf. Der Griff 2138 wirkt bevorzugt mit dem Deckel 13 des Filters 10 zusammen und sorgt für einen sicheren Sitz des Hauptfiltereinsatzes 100 in dem Filtergehäuse 12 und übt gleichzeitig einen axial in Richtung der Hauptströmungsrichtung X1 gerichteten Druck auf die Dichtung 116 aus und sorgt somit für einen festen Dichtsitz des Hauptfiltereinsatzes 100 in dem Filtergehäuse 12.

In beiden Ausführungsformen ist es jedoch bevorzugt, dass durch vom Deckel 13 seitlich des Hauptfilterelements 2100, 100 in das Filtergehäuse 12 hineinragende, insbesondere keilförmige Schwerter im geschlossenen Zustand auf das Hauptfilterelement 2100, 100 eine Kraft in Richtung der Dichtfläche 114, 2114 ausüben. Dies kann bevorzugt dadurch erfolgen, dass die Schwerter an ihren Schmalseiten jeweils eine Abstützfläche aufweisen. Die Schwerter stützen sich dabei bevorzugt mit einer ersten Abstützfläche am Filtergehäuse ab und liegen mit einer zweiten, der ersten gegenüberliegenden Abstützfläche an einer Anlagefläche 2121 des Hauptfilterelements 100 oder des Trägerrahmens 2118 an und drücken dadurch die Dichtung 116, 2116 des Hauptfilterelementes 100, 2100 gegen die Dichtfläche des Gehäuses 12. Im Falle der ersten Ausführungsform wird die Kraft dabei vom Trägerrahmen 118 direkt aufgrund der Formschlussverbindung auf die Dichtung 116 übertragen. Im Falle der zweiteiligen Ausführungsform wirkt die Abstützkraft vom Schwert gegen die Anlagefläche 2121 und wird so in den Trägerrahmen 2118 eingeleitet, der sich wiederum an der Dichtungsabstützfläche 2113 an der Dichtung 2116, insbesondere deren Abstützfläche 2115, abstützt und so die Kraft in die Dichtung 2116 einleitet, an welcher dann die Verpressung der Dichtfläche 2114 mit der korrespondierenden Anlagefläche des Gehäuses 12 erfolgt.

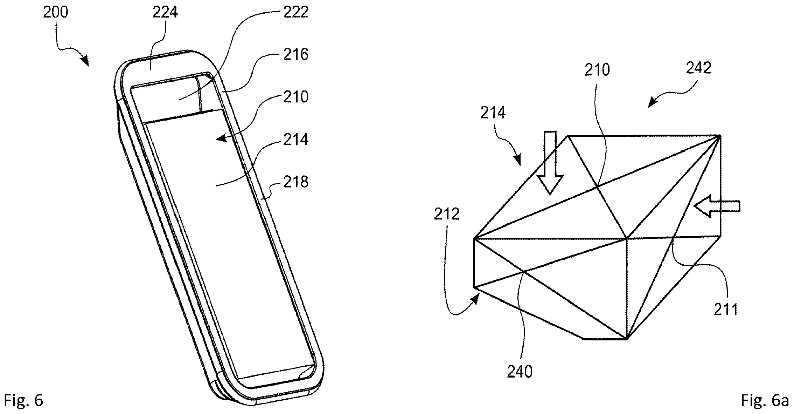

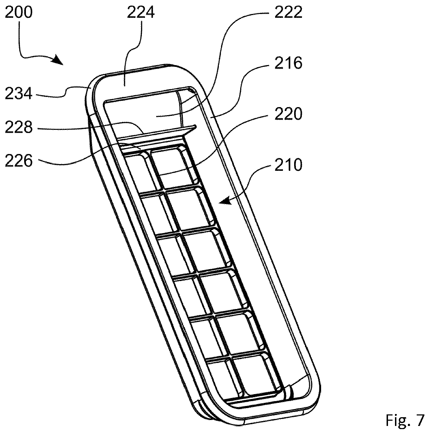

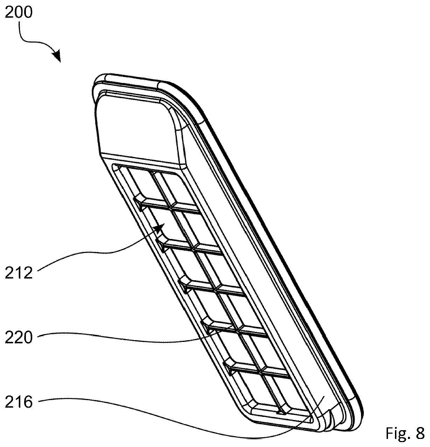

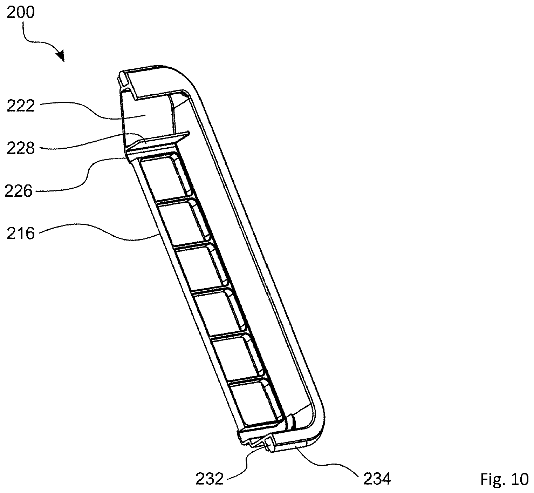

Die Figuren 6 bis 10 zeigen eine Ausführungsform eines Sekundärfiltereinsatzes 200. Der Sekundärfiltereinsatz 200 weist eine Hauptanströmfläche 210, eine Abströmfläche 212 sowie eine Hauptdurchströmungsrichtung Y1 auf. Ferner weist der Sekundärfiltereinsatz 200 einen Filterkörper 214 auf, der von einem Filtereinsatzrahmen 216 getragen wird. Anströmseitig schließt der Filtereinsatzrahmen 216 mit einem um den Filterkörper 214 umlaufenden Rahmenbereich 218 im Wesentlichen bündig mit dem Filterkörper 214 ab. Der Rahmenbereich 218 kann beispielsweise als Widerlager für die Abstütznoppen 128 des Hauptfiltereinsatzes 100 im eingesetzten Zustand beider Filtereinsätze 100, 200 dienen.

In der vorliegenden Ausführungsform ist der Filterkörper 214 im Wesentlichen quaderförmig. Es sind aber auch andere Grundformen wie etwa ein Prisma denkbar. Abströmseitig, also im Bereich der Abströmfläche 212, ist der Filtereinsatzrahmen 216 mit einer Gitterstruktur 220 versehen. Die Gitterstruktur 220 überdeckt die Abströmfläche 212 zumindest teilweise. Bei einem hohen Differenzdruck zwischen der Anströmseite 210 und der Abströmseite 212 verhindert die Gitterstruktur 220 ein unerwünschtes Durchbiegen oder gar Durchfallen des Filterkörpers 214.

An einer Schmalseite des quaderförmigen Filterkörpers 214 ist der Filtereinsatzrahmen 216 mit einer Griffmulde 222 versehen. Um ein bequemes Greifen in der Griffmulde 222 für die Hand einer Personen zu ermöglichen, die den Sekundärfiltereinsatz 200 wechseln möchte, ist der Rahmenbereich 218 im Bereich der Griffmulde 222 zu einem Griffsteg 224 verbreitert. Die Breite des Griffstegs 224 ist dabei so gewählt, dass ein direktes Anströmen eines die Hauptfiltereinsatz-Abströmfläche 112 verlassendes Fluid zu dem Filterkörper 214 insbesondere an der der Griffmulde 222 zugewandten Seite möglich ist. Dies ist insbesondere auch aus der Querschnittsansicht der Figur 4 gut erkennbar. Auch von der obersten Kante 113 der Hauptfilterelement-Abströmfläche 112 kann ein austretendes Fluids direkt zu dem Filterkörper 214 des Sekundärfiltereinsatzes 200 strömen. Dabei kann das Fluid insbesondere über die Nebenanströmfläche 211 in den Filterkörper 214 eintreten.

In diesem Ausführungsbeispiel ist der Filterkörper 214 als Filterbalg ausgebildet. Die Faltkanten verlaufen dabei parallel zu der Längsachse des Sekundärfiltereinsatzes 200, sodass die Stirnseiten der Falten die Nebenanströmfläche 211 bilden. Die Faltkanten der Falten bilden die Hauptanströmfläche 210 und die Abströmfläche 212. Durch die Kombination aus Griffmulde 222 und über die Nebenanströmfläche 211 seitlich anströmbarem Filterbalg 214 können die Druckverluste an dem Sekundärfiltereinsatz 200 verringert werden, da der Sekundärfiltereinsatz 200 deutlich besser an die Strömungsführung von dem Hauptfiltereinsatz 100 zu dem Abströmstutzen in dem Filtergehäuse 12 angepasst ist. Gleichzeitig erhöht die Gitterstruktur 220 an der Abströmseite 212 die Kollapsfestigkeit des Sekundärfiltereinsatzes 200. Ferner ist über den integrierten Griff an der Griffmulde 222 eine leichte Demontage des Filtereinsatzes 200 möglich.

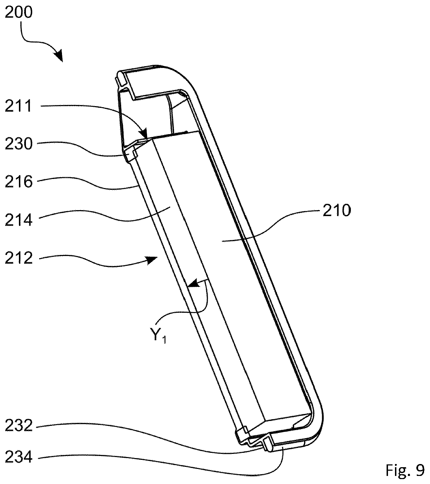

Der Sekundärfiltereinsatz 200 weist einen Filterrahmen 216 auf, der umlaufend um den abströmseitigen Rand des Filterkörpers 214 eine Nut 226 vorsieht. Gleichzeitig ist an der der Griffmulde 222 zugewandten Seite des Filtereinsatzrahmens 216 ein Steg 228 vorgesehen. Die Nut 226 dient als Gussform für eine umlaufende Verklebung und Abdichtung des Filterkörpers 214 mit dem Filtereinsatzrahmen 216. Die Abdichtung und Verklebung wird durch ein Dichtungsmaterial 230 (siehe Figur 9) bewirkt. Das Dichtungsmaterial 230 kann beispielsweise ein schäumendes Polyurethan sein. Es sind aber auch silikonbasierte Materialsysteme denkbar.

Die Nut 226 und zusätzlich der Steg 228 sorgen für eine gute mechanische Ankopplung des Dichtungsmaterials 230 an den Filtereinsatzrahmen 216. Diese Ausgestaltung hat zudem den Vorteil, dass nach dem Einbringen des Dichtungsmaterials 230 in die Nut 226 und dem Einlegen des Filterkörpers 214 in den Filtereinsatzrahmen 216 und einem nachfolgenden Aufschäumen und Aushärten keine weiteren Bearbeitungsschritte wie etwa ein Beschneiden des Dichtungsmaterials 230 notwendig sind. Überschüssiges Material kann teilweise von dem Filterkörper 214 aufgenommen werden oder in den Zwischenbereich zwischen Filterkörper 214 und Filtereinsatzrahmen 216 gelangen, ohne dass dies nachteilig wäre.

Die Tiefe der Nut 226 verläuft im Wesentlichen entlang der Hauptdurchströmungsrichtung Y1 des Sekundärfiltereinsatzes 200. Die abströmseitige Gitterstruktur 222 kann einteilig mit dem Filtereinsatzrahmen 216 ausgebildet sein.
An seinem anströmseitigen Umfang weist der Filtereinsatzrahmen 216 eine Dichtungsaufnahmenut 232 auf. In diese Dichtungsaufnahmenut 232 kann eine beispielsweise aus einem Moosgummi hergestellte Dichtung 234 eingelegt werden. Die Dichtung 234 wirkt somit radial, d.h. senkrecht zur Hauptdurchströmungsrichtung Y1 des Sekundärfiltereinsatzes 200.

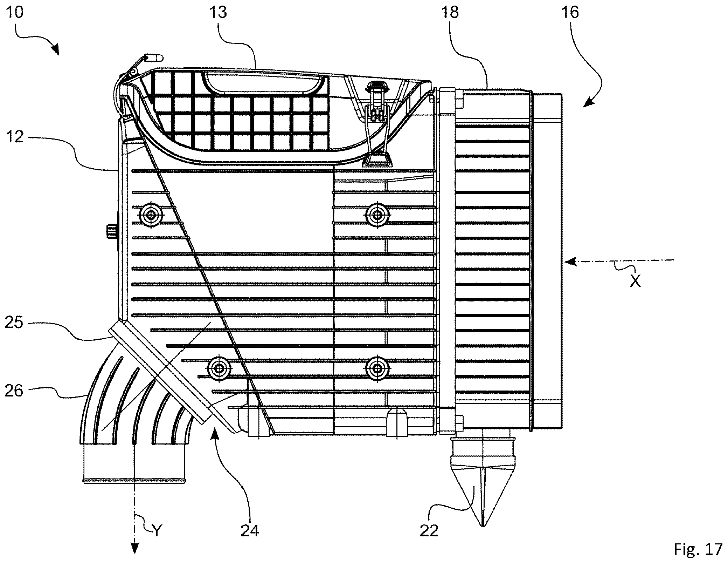

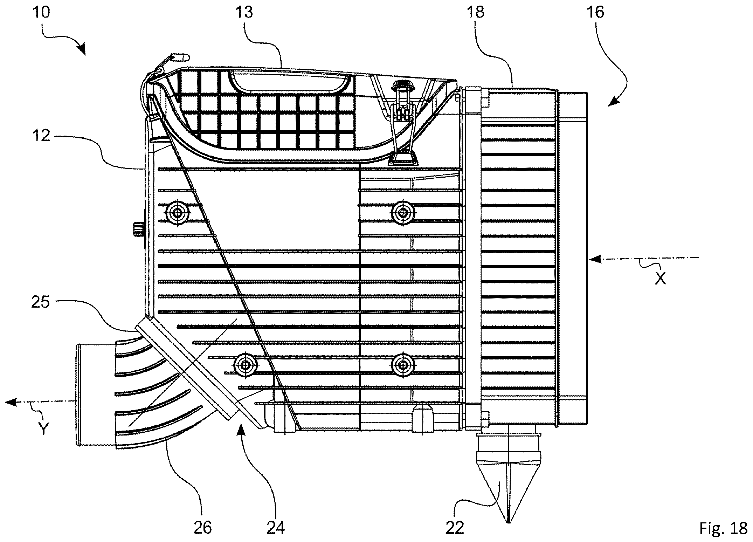

Die Figuren 15 bis 19 zeigen den Filter 10 mit verschiedenen Orientierungen des Abströmstutzens 26. Das Filtergehäuse 12 des Filters 10 weist im Abströmbereich 24 einen Befestigungsbereich 25 auf. Der Befestigungsbereich 25 schließt mit der Hauptanströmrichtung X des Filtergehäuses 12 einen Winkel von ungefähr 45° ein. An den Befestigungsbereich 25 ist der Abströmstutzen 26 befestigbar. Der Abströmstutzen 26 ist so geformt, dass ein durch den Abströmstutzen 26 strömendes Fluid eine Umlenkung von 45° erfährt. Der Abströmstutzen 46 ist vor einem endgültigen Befestigen an der Befestigungsfläche 25 drehbar ansetzbar. Es kann somit erst zu einem sehr späten Zeitpunkt bei der Herstellung des Filters 10 die endgültige Umlenkungsrichtung bzw. Abströmrichtung Y des Filters 10 festgelegt werden. Bei der in dieser Ausführungsform gezeigten Geometrie sind eine Inline-Durchströmung (Figur 15, Figur 18), eine Umlenkung um 90° (Figur 17) sowie dazwischenliegende Winkelbereiche möglich. Bei den zwischen den extremen Winkeln liegenden Winkelbereichen erfolgt eine zusätzlich eine seitliche Ablenkung.
Die anhand der Figuren 1 bis 19 oben beschriebenen Ausführungsbeispiele stellen Ausdetaillierungen und Weiterentwicklungen der anhand der im Folgenden, anhand der Figuren 20 bis 36 beschriebenen Ausführungsformen dar, wobei die durch die Weiterentwicklung hinzugefügten Merkmale vorteilhaft aber nicht zwingend erforderlich sind und auch einzeln zu einer Ausführungsform gemäß der nachstehend gezeigten Figuren hinzugefügt werden können.

Es wird nun unter Bezugnahme auf die Figuren 20 bis 23 eine erste Ausführungsform eines erfindungsgemäßen Filters 1010 beschrieben. Der Filter kann insbesondere im Luftansaugtrakt von Bau- oder Landmaschinen, Kompressoren oder sonstigen Geräten mit Brennkraftmaschinen zur Filterung eines Fluids, insbesondere von Luft, eingesetzt werden. Der Filter 1010 weist ein Filtergehäuse 1011 auf, das sich grob in einen rohseitigen Bereich 1012 und einen reinseitigen Bereich 1013 aufgliedern lässt. In dem reinseitigen Bereich 1012 ist ein Hauptfilterelement 1020 in das Filtergehäuse 1011 einsetzbar. Das Hauptfilterelement 1020 weist eine Hauptfilterelement-Anströmfläche 1021 sowie eine Hauptfilterelement-Abströmfläche 1022 auf und wird entlang einer Hauptfilterelement-Strömungsrichtung X1 durchströmt. Die Hauptfilterelement-Strömungsrichtung X1 fällt in der hier beschriebenen Ausführungsform im Wesentlichen mit der Anströmrichtung X0 des Filtergehäuses 1011 zusammen. Es sind aber auch andere Konstellationen denkbar, bei denen die Hauptfilterelement-Strömungsrichtung X1 und die Anströmrichtung X0 des Filtergehäuses 1011 einen Winkel einschließen. Dem Hauptfilterelement 1020 vorgeschaltet ist ein Grob- oder Vorabscheidermodul, das vorliegend als Zyklonblock 1040 ausgebildet ist. In dem Zyklonblock 1040 ist eine Vielzahl einzelner Vorabscheiderzellen 1041 in einem sogenannten Multi-Zyklonblock parallel geschaltet. In dem Zyklonblock 1040 vorabgeschiedener Staub und/oder Wasser wird durch einen Staubaustragstutzen 1042 aus dem Gehäuse entfernt.

Stromabwärts des Hauptfilterelements 1020 ist ein Sekundärfilterelement 1030 angeordnet. Die Sekundärelement-Anströmfläche 1031 des Sekundärfilterelements 1030 ist der Hauptfilterelement-Abströmfläche 1022 zugewandt, die Abströmfläche 1032 des Sekundärfilterelements 1030 ist in Richtung einer Abströmöffnung 1017 des Filtergehäuses 1011 orientiert. Das Sekundärfilterelement 1030 ist in dem von dem Hauptfilterelement 1020 aus gesehen reinseitigen Bereich 1013 des Filtergehäuses 1011 angeordnet und bietet einen Schutz vor Eindringen von Verschmutzungen in das dem Filter nachgelagerte Ansaugsystem insbesondere bei einem Wechsel des Hauptfilterelements 1020.

Das Hauptfilterelement 1020, in Figur 24 als separates Bauteil gezeigt, weist an seiner Abströmfläche 1022 eine Dichtfläche 1026 auf, an der eine Dichtung 1024 zur fluiddichten Trennung des rohseitigen Bereichs 1012 und des reinseitigen Bereichs 1013 des Filtergehäuses 1011 vorgesehen ist. Die Dichtfläche 1026 ist schräg zur Hauptströmungsrichtung X1 des Hauptfilterelements 1020 angeordnet. Der in diesem Ausführungsbeispiel gewählte Winkel α beträgt 60°. Der Winkelwert ist lediglich ein Ausführungsbeispiel. Erfindungsgemäß kann der Winkel α zwischen 10 und 80° variiert werden. Besonders bevorzugt ist der Winkelbereich zwischen 70 und 30°.

Die Dichtung 1024 der Dichtfläche 1026 liegt an einer entsprechenden Gehäusestruktur 1028 an und wird durch einen Deckel 1014 des Gehäuses 1011 gegen den durch die Gehäusestruktur 1028 gebildeten Dichtsitz gedrückt. Der Deckel 1014, der das Gehäuse verschließt, lässt sich senkrecht zur Hauptströmungsrichtung X1 des Hauptfilterelements 1020 von dem Gehäuse entfernen und weist eine schwertförmige, paarweise an dem Deckel 1014 angeordnete Anpressstruktur 1050, 1051 auf. Diese ist in ihrer Form der Schräge der Dichtfläche 1026 angepasst und übt im verschlossenen Zustand auf das Hauptfilterelement 1020 eine Kraft aus, die im Wesentlichen senkrecht zur Hauptströmungsrichtung X1 ausgerichtet ist. Durch die Schräge der Dichtfläche 1026 wird die senkrecht zur Hauptströmungsrichtung X1 verlaufende Kraft in eine zumindest teilweise in der Hauptströmungsrichtung X1 verlaufende Kraft umgelenkt und führt so zu einer zuverlässigen Verpressung des Hauptfilterelements 1020 mit dem Gehäuse 1011. Insbesondere wird so eine axiale, das heißt in Hauptströmungsrichtung X1 verlaufende Anpresskraft erzeugt, die eine besonders hohe Dichtwirkung erzielt. Gleichzeitig wird eine besonders gute Anlage der Dichtung 1026 an die entsprechende Gehäusestruktur erzielt, da bei Anpressen durch den Gehäusedeckel die Dichtung ein wenig gleitet und so Unebenheiten gut in die Dichtmasse eingeformt werden.

Das Hauptfilterelement 1020 kann einen Faltenbalg als Grundaufbau umfassen. Zur Erzielung der gewünschten Dichtflächenschräge kann die Faltenhöhe beziehungsweise -tiefe entlang einer Richtung senkrecht zur Hauptströmungsachse X1 schrittweise verringert sein. Bei einem derartigen Aufbau werden die Faltenkanten angeströmt. Die Stirnseiten der Falten müssen bei einem derartigen Aufbau zumindest teilweise verleimt werden, entweder ganzflächig oder jede zweite Stirnseite, sodass Roh- und Reinseite getrennt bleiben. In der Schnittansicht der Figur 23 verlaufen bei der beschriebenen Ausführungsform die Faltenkanten senkrecht zur Zeichnungsebene, die Stirnseite der Falten liegt in der Zeichnungsebene. Dies bedeutet, dass die Hauptströmungsrichtung X1 parallel zu der durch die Stirnseiten der Faltkanten gebildeten Ebenen und senkrecht zur jeder Faltkante verläuft.

Alternativ kann bei einem erfindungsgemäßen Faltenbalg auch die Orientierung der einzelnen Falten derart sein, dass die Stirnseite der Falten im Wesentlichen senkrecht zur Zeichnungsebene der Figur 23 verläuft, das heißt, der Deckel 1014 verläuft parallel zur Stirnseite der Falten des Hauptfilterelements 1020. Die Hauptfilterelement-Anströmfläche 1021 wird dann durch senkrecht zur Hauptströmungsrichtung X1 verlaufende Faltkanten gebildet. Die Faltkanten verlaufen in der Figur 20 senkrecht von oben nach unten. Die Hauptfilterelement-Abströmfläche 1022 wird ebenfalls durch Faltkanten gebildet, die entlang der Schräge gemäß dem Winkel α verlaufen. Bei einer derartigen Faltung variiert die Faltenhöhe im Verlauf der Faltkante.

Die Figuren 24 und 25 stellen das Hauptfilterelement 1020 als herausgenommenes Element dar. Die Figuren 26 und 27 veranschaulichen die gerade erwähnten alternativen Faltungsarten als Skizze. In den Skizzen ist jeweils eine Stirnseite der Falten mit dem Bezugszeichen 1023 und eine Faltkante mit dem Bezugszeichen 1025 bezeichnet.

Das Sekundärelement 1030, das in den Figuren 28 und 29 als herausgenommenes Element dargestellt ist, kann in der vorliegenden Ausführungsform als gerade gefaltetes Flachelement ausgeführt sein.
Es wird nun unter Bezugnahme auf die Figuren 23, 30 und 31 der Filter 1010 hinsichtlich der Abströmsituation näher erläutert. Das Filtergehäuse 1011 weist im reinseitigen Bereich 1013 einen Abström-bereich 1015 auf. Der Abströmbereich 1015 ist mit einer Befestigungsfläche 1016 versehen. Die Befestigungsfläche 1016 schließt sowohl mit der Anströmrichtung X0 des Filtergehäuses als auch mit der Hauptströmungsrichtung X1 des Hauptfilterelements 1020 einen Winkel von 45° ein. An der Befestigungsfläche 1016 ist ein Abströmstutzen 1018 befestigbar. Die Geometrie des Abströmstutzens 1018 ist so gewählt, dass ein zur Befestigung an der Befestigungsfläche 1016 vorgesehener Befestigungsbereich 1019 relativ zu der durch den Abströmstutzen 1018 festgelegten Abströmrichtung ebenfalls um 45° geneigt ist. Außerdem ist der Befestigungsbereich 1019 des Abströmstutzens 1018 rotationssymmetrisch ausgebildet, das heißt, er bildet eine kreisförmige Scheibe, in der eine Durchbrechung für die Abströmöffnung 1017 des Gehäuses 1011 vorgesehen ist. Aufgrund der Rotationssymmetrie kann der Abströmstutzen 1018 vor der endgültigen Befestigung des Befestigungsbereichs 1019 an der Befestigungsfläche 1016 des Abströmbereichs 1015 gedreht werden und so die Abströmrichtung Y0 des Filtergehäuses 1011 festgelegt werden. Je nach Orientierung des Abströmstutzens 1018 kann der Winkel zwischen der Anströmrichtung X0 und der Abströmrichtung Y0 zwischen 0° (Inline-Durchströmung) und 90° (rechtwinklige Abströmung) variiert werden. In Figuren 20 und 23 ist eine Umlenkung der Anströmrichtung X0 um 90° zur Abströmrichtung Y0 gezeigt. In Figur 30 ist eine Inline-Durchströmung gezeigt, das heißt Anströmrichtung X0 und Abströmrichtung Y0 sind parallel zueinander. Figur 31 zeigt einen Zwischenwinkel von etwa 45° zwischen Anströmrichtung X0 und Abströmrichtung Y0.

In den Figuren 32 bis 36 wird eine alternative Ausführungsform des Filters 1010 hinsichtlich der Befestigungsfläche 1016 des Abströmbereichs 1015 gezeigt. In Figur 36 ist bei dieser alternativen Ausführungsform zusätzlich die Geometrie von Hauptfilterelement und Sekundärfilterelement abgeändert.

In den Figuren 32 bis 35 ist das Filterelement 1010 dahingehend abgeändert, dass eine Befestigungsfläche 1116 vorgesehen ist, die auf einer Zylindermantelfläche liegt. Die Achse eines solchen Zylindermantels liegt senkrecht zur Zeichenebene, das heißt auch senkrecht zur Hauptströmungsrichtung X1 des Hauptfilterelements 1020. Entsprechend der von außen gesehen konvexen Befestigungsfläche 1116 ist ein Abströmstutzen 1118 vorgesehen, der einen entsprechend konkav geformten Befestigungsbereich 1119 aufweist. Je nach Befestigungsort des Abströmstutzens 1118 an der konvexen Befestigungsfläche 1116 kann die Abströmrichtung Y0 des Filtergehäuses 1011 variiert werden.

Figur 36 zeigt eine Ausführungsform, bei der das Filtergehäuse 1011 im Wesentlichen vergleichbar zu der Ausführungsform der Figuren 32 bis 35 ausgeführt ist, aber die Filterelementgeometrie verändert ist. Zur Vermeidung von Wiederholungen wird auf die Beschreibung von Merkmalen, die in den Figuren mit gleichen Bezugszeichen versehen sind, verzichtet.

In jeder der gezeigten Varianten kann das Sekundärfilterelement einen integrierten Griff zur Demontage des Sekundärfilterelements aufweisen.

## Patentansprüche

1. Filtereinsatz (100, 200, 2100) für einen Filter (10), insbesondere für Brennkraftmaschinen, zur Filtration von Luft, mit
einer prismatischen Grundform, wobei die parallel zueinander angeordneten Grundfläche (240, 340) und Deckfläche (242, 342) eine polygone, viereckige Grundform aufweisen, mit einer ersten Mantelfläche (210, 310) und einer zur ersten Mantelfläche (210, 310) benachbarten zweiten Mantelfläche (211, 311), wobei die erste Mantelfläche (210, 310) Anströmfläche ist und zur benachbarten zweiten Mantelfläche und zur Hauptströmungsrichtung innerhalb des Hauptfiltereinsatzes senkrecht steht,
einer dritten Mantelfläche (212, 312), die eine Abströmfläche ist und einen Winkel mit der ersten Mantelfläche einschließt, der größer 10° und kleiner 80° ist, und
einer vierten Mantelfläche (313), die der zweiten Mantelfläche (211) parallel gegenüberliegt, wobei
der Filtereinsatz im Bereich der Abströmfläche (112, 312) eine Dichtung (116, 2116) zur Trennung eines Filterinnenraums in Reinseite und Rohseite aufweist und die Dichtfläche (114, 2114) und die Hauptfiltereinsatz-Abströmfläche (112, 2112) parallel verlaufen.

2. Filtereinsatz nach Anspruch 1, mit einem zickzackförmig gefalteten Filtermedium (214), wobei die Falten äußere Faltkanten aufweisen, die auf der ersten Mantelfläche (210, 310, 2120) liegen und den äußeren Faltkanten gegenüberliegende innere Faltkanten aufweisen, die auf der dritten Mantelfläche (212, 312, 2112) liegen.

3. Filtereinsatz nach Anspruch 2, wobei sich die Tiefe benachbarter Falten unterscheidet, insbesondere derart, dass die Faltenhöhen an zweiter und vierter Mantelfläche unterschiedlich sind, wobei sich die Faltenhöhe zwischen zweiter und vierter Mantelfläche kontinuierlich, insbesondere linear, ändert.

4. Filtereinsatz nach einem der vorhergehenden Ansprüche 1 bis 3, wobei die Falten zwei Stirnseiten aufweisen, wobei die eine Stirnseite der Falten auf der Grundfläche (240, 340) liegt und die andere Stirnseite der Falten auf der Deckfläche (242, 340) liegt.

5. Filtereinsatz nach einem der vorhergehenden Ansprüche, wobei der Filtereinsatz im Bereich der Abströmfläche (112, 312) eine Abstandsstruktur (128, 2128) zur Festlegung eines Abstands zwischen dem Filtereinsatzrahmen und einem stromabwärts anordenbaren weiteren Filtereinsatz (200) aufweist.

6. Filtereinsatz nach Anspruch 5, wobei die Abstandsstruktur (128, 2128) integral mit der Dichtung (116, 2116) ausgebildet, insbesondere in die Dichtung eingeformt, ist.

7. Filtereinsatz nach einem der vorhergehenden Ansprüche, umfassend einen den Filterkörper (120) tragenden Filtereinsatzrahmen, wobei der Filtereinsatzrahmen (118) im Bereich der Anströmfläche (110) einen außen um den Filterkörper (120) umlaufenden Kantenschutz (130) aufweist, wobei der Kantenschutz (130) den Filterkörper (120) und den Filtereinsatzrahmen (118) lösbar oder unlösbar verbindet.

8. Filter (10) mit einem Hauptfiltereinsatz (100, 2100) und einem Sekundärfiltereinsatz (200), wobei der Hauptfiltereinsatz (100, 2100) gemäß einem der Ansprüche 1 bis 7 ausgeführt ist.

9. Filter nach Anspruch 8, mit
einem Filtergehäuse (12), das einen rohseitigen Bereich (14) und einen reinseitigen Bereich (15) aufweist,
einem in das Filtergehäuse (12) einsetzbaren Hauptfiltereinsatz (100), nach einem der Ansprüche 1 bis 7, mit einer Hauptfiltereinsatz-Anströmfläche (110), einer Hauptfiltereinsatz-Strömungsrichtung (X1), einer Hauptfiltereinsatz-Abströmfläche (112) sowie einer auf einer Dichtfläche (114) angeordneten Dichtung (116) zur fluiddichten Trennung des rohseitigen Bereichs (14) und des reinseitigen Bereichs (15) des Filtergehäuses (12), sowie
einem stromabwärts des Hauptfiltereinsatzes (100) angeordneten Sekundärfiltereinsatz (200) mit einer Sekundärfiltereinsatz-Anströmfläche (210), einer Sekundärfiltereinsatz-Strömungsrichtung (Y1) und einer Sekundärfiltereinsatz-Abströmfläche (212),
wobei die Dichtfläche (114) schräg zur Hauptfiltereinsatz-Strömungsrichtung (X1) des Hauptfiltereinsatzes (100) angeordnet ist.

10. Filter (10) nach Anspruch 8 oder 9,
wobei das Filtergehäuse eine Abströmöffnung aufweist, die in Einführrichtung gesehen unterhalb des Hauptfilterelementes angeordnet ist, wobei der Hauptfiltereinsatz die Abströmöffnung in Hauptströmungsrichtung des Hauptfiltereinsatzes gesehen überragt

11. Filter nach Anspruch 10, wobei
die Dichtfläche (114) und die Hauptströmungsrichtung (X1) einen Winkel einschließen, der zwischen 80° und 10° liegt.

12. Filter nach einem der vorhergehenden Ansprüche 10 bis 11, wobei die Dichtfläche (114) und die Hauptfiltereinsatz-Abströmfläche (112) in einer Ebene liegen.

13. Filter nach einem der vorhergehenden Ansprüche 10 bis 12, wobei
das Filtergehäuse (12) eine Anströmrichtung (X), eine Abströmrichtung (Y) sowie einen Abströmbereich (24) mit einer Abströmöffnung aufweist und an den Abströmbereich (24) ein Abströmstutzen (26) befestigbar ist, wobei der Abströmbereich (24) eine Befestigungsfläche (25) für den Abströmstutzen (26) aufweist und die Befestigungsfläche (25) mit der Hauptfiltereinsatz-Strömungsrichtung (X1) einen Winkel von 45° einschließt.

14. Filter nach einem der vorhergehenden Ansprüche 10 bis 13, wobei
der Hauptfiltereeinsatz (100) entlang einer Einführachse (Z) in das Filtergehäuse (12) einsetzbar und entnehmbar ist, die mit der Hauptströmungsrichtung (X1) einen Winkel zwischen 90° und dem Winkel einschließt, den die Dichtfläche (114) und die Hauptströmungsrichtung (X1) einschließen,
das Filtergehäuse (12) (13) einen Deckel aufweist, der so ausgebildet ist, dass er im das Filtergehäuse (12) verschließenden Zustand auf den Hauptfiltereinsatz (100)eine Kraft in Richtung der Dichtfläche (114) ausübt.

## Claims

1. Filter insert (100, 200, 2100) for a filter (10), in particular for internal combustion engines, for filtering air, with
a prismatic basic shape, wherein the base surface (240, 340) and the cover surface (242, 342) arranged parallel to each other feature a polygonal, quadrangular basic shape, with a first circumferential surface (210, 310) and a second circumferential surface (211, 311) adjacent to the first circumferential surface (210, 310), wherein the first circumferential surface (210, 310) is an inflow surface and perpendicular to the adjacent second circumferential surface and to the main flow direction within the main filter insert,
a third cylindrical surface (212, 312), which is an outflow surface and forms an angle with the first circumferential surface which is larger than 10° and smaller than 80°, and
a fourth circumferential surface (313), which is disposed parallel to the second circumferential surface (211), wherein
the filter insert features a seal (116, 2116) in the area of the outflow surface (112, 312) for separating a filter interior into a clean side and a raw side, and the sealing surface (114, 2114) and the outflow surface of the main filter insert (112, 2112) extend parallel.

2. Filter insert according to claim 1, with a zigzag-folded filter medium (214), wherein the folds feature outer fold edges lying on the first circumferential surface (210, 310, 2120) and inner fold edges opposite the outer fold edges and lying on the third circumferential surface (212, 312, 2112).

3. Filter insert according to claim 2, wherein the depth of adjacent folds differs, in particular in such a way that the fold heights on the second and fourth circumferential surfaces are different, wherein the fold height between the second and fourth circumferential surfaces changes continuously, in particular linearly.

4. Filter insert according to one of the preceding claims 1 to 3, wherein the folds feature two end faces, wherein one end face of the folds lies on the base surface (240, 340) and the other end face of the folds lies on the cover surface (242, 340).

5. Filter insert according to one of the preceding claims, wherein the filter insert features a spacing structure (128, 2128) in the area of the outflow surface (112, 312) for defining a distance between the filter insert frame and a further filter insert (200) which can be disposed downstream.

6. Filter insert according to claim 5, wherein the spacing structure (128, 2128) is integrally formed with the seal (116, 2116), in particular molded into the seal.

7. Filter insert according to one of the preceding claims, comprising a filter insert frame supporting the filter body (120), wherein the filter insert frame (118) features in the area of the inflow surface (110) an edge protection (130) running around the outside of the filter body (120), wherein the edge protection (130) connects the filter body (120) and the filter insert frame (118) detachably or nondetachably.

8. Filter (10) with a main filter insert (100, 2100) and a secondary filter insert (200), wherein the main filter inser t(100, 2100) is designed according to one of the claims 1 to 7.

9. Filter according to claim 8, with
a filter housing (12), which features a raw side area (14) and a clean side area (15),
a main filter element (100) insertable into the filter housing (12), according to one of the claims 1 to 7, with an inflow surface of the main filter insert (110), a flow direction of the main filter insert (X1), an outflow surface of the main filter insert (112) as well as a seal (116) disposed on a sealing surface (114) for fluidtightly separating the raw side area (14) and the clean side area (15) of the filter housing (12), as well as
a secondary filter insert (200) disposed downstream of the main filter insert (100) with an inflow surface of the secondary filter insert (210), a flow direction of the secondary filter insert (Y1) and an outflow surface of the secondary filter insert (212),
wherein the sealing surface (114) is arranged obliquely to the flow direction of the main filter insert (X1) of the main filter insert (100).

10. Filter (10) according to claim 8 or 9,
wherein the filter housing features an outflow opening which, viewed in the direction of insertion, is disposed below the main filter element, wherein the main filter insert projects beyond the outflow opening, viewed in the main flow direction of the main filter insert.

11. Filter according to claim 10, wherein
the sealing surface (114) and the main flow direction (X1) form an angle between 80° and 10°.

12. Filter according to one of the preceding claims 10 to 11, wherein the sealing surface (114) and the outflow surface of the main filter insert (112) lie in one plane.

13. Filter according to one of the preceding claims 10 to 12, wherein
the filter housing (12) features an inflow direction (X), an outflow direction (Y) and an outflow section (24) with an outflow opening and an outflow connection piece (26) can be attached to the outflow section (24), wherein the outflow section (24) features an attachment surface (25) for the outflow connection piece (26) and the attachment surface (25) forms an angle of 45° with the flow direction of the main filter insert (X1).

14. Filter according to one of the preceding claims 10 to 13, wherein
the main filter insert (100) is insertable into and removable from the filter housing (12) along an insertion axis (Z) which forms with the main flow direction (X1) an angle between 90° and the angle formed by the sealing surface (114) and the main flow direction (X1),
the filter housing (12) (13) features a cover which is designed in such a way that in the state closing the filter housing (12) it exerts a force on the main filter insert (100) in the direction of the sealing surface (114).

## Revendications

1. Cartouche filtrante (100, 200, 2100) pour un filtre (10), notamment pour les moteurs à combustion interne, destinée à filtrer l'air, avec
une forme de base prismatique, dans laquelle la surface de base (240, 340) et la surface de couverture (242, 342) disposées parallèlement l'une à l'autre présentent une forme de base polygonale, quadrangulaire, avec une première surface circonférentielle (210, 310) et une deuxième surface circonférentielle (211, 311) adjacente à la première surface circonférentielle (210, 310), dans laquelle la première surface circonférentielle (210, 310) est une surface d'afflux et perpendiculaire à la deuxième surface circonférentielle adjacente et à la direction de flux principale à l'intérieur de la cartouche filtrante principale,
une troisième surface circonférentielle (212, 312), qui est une surface d'écoulement et qui comprend un angle avec la première surface circonférentielle qui est supérieur à 10° et inférieur à 80°, et
une quatrième surface circonférentielle (313), qui est parallèle à la deuxième surface circonférentielle (211), dans laquelle
la cartouche filtrante présente un joint d'étanchéité (116, 2116) dans la zone de la surface d'écoulement (112, 312) pour séparer un intérieur du filtre en un côté pur et un côté brut, et la surface d'étanchéité (114, 2114) et la surface d'écoulement de la cartouche filtrante principale (112, 2112) sont parallèles.

2. Cartouche filtrante selon la revendication 1, avec un milieu filtrant plié en accordéon (214), dans laquelle les plis présentent des arêtes de pliage extérieures qui reposent sur la première surface circonférentielle (210, 310, 2120) et qui présentent des arêtes de pliage intérieures opposées aux arêtes de pliage extérieures et qui reposent sur la troisième surface circonférentielle (212, 312, 2112).

3. Cartouche filtrante selon la revendication 2, dans laquelle la profondeur des plis adjacents diffère, notamment de telle sorte que les hauteurs de plis sur les deuxième et quatrième surfaces circonférentielles sont différentes, dans laquelle la hauteur de plis entre les deuxième et quatrième surfaces circonférentielles varie de manière continue, notamment de manière linéaire.

4. Cartouche filtrante selon l'une des revendications 1 à 3 précédentes, dans laquelle les plis présentent deux faces d'extrémité, dans laquelle une face d'extrémité des plis repose sur la surface de base (240, 340) et l'autre face d'extrémité des plis repose sur la surface de couverture (242, 340).

5. Cartouche filtrante selon l'une des revendications précédentes, dans laquelle la cartouche filtrante présente une structure d'écartement (128, 2128) dans la zone de la surface d'écoulement (112, 312) pour définir une distance entre le cadre de la cartouche filtrante et une autre cartouche filtrante (200) qui peut être disposée en aval.

6. Cartouche filtrante selon la revendication 5, dans laquelle la structure d'écartement (128, 2128) est formée d'un seul tenant avec le joint d'étanchéité (116, 2116), notamment moulée dans le joint d'étanchéité.

7. Cartouche filtrante selon l'une des revendications précédentes, comprenant un cadre de la cartouche filtrante supportant le corps de filtre (120), dans laquelle le cadre de la cartouche filtrante (118) présente dans la zone de la surface d'afflux (110) une protection d'arête (130) s'étendant à l'extérieur autour du corps de filtre (120), dans laquelle la protection d'arête (130) relie le corps de filtre (120) et le cadre de la cartouche filtrante (118) de manière amovible ou non amovible.

8. Filtre (10) avec une cartouche filtrante principale (100, 2100) et une cartouche filtrante secondaire (200), dans lequel la cartouche filtrante principale (100, 2100) est conçu selon l'une des revendications 1 à 7.

9. Filtre selon la revendication 8, avec
un boîtier de filtre (12) présentant une zone côté brut (14) et une zone côté pur (15),
une cartouche filtrante principale (100) insérable dans le boîtier de filtre (12), selon l'une des revendications 1 à 7, avec une surface d'afflux de la cartouche filtrante principale (110), une direction de flux de la cartouche filtrante principale (X1), une surface d'écoulement de la cartouche filtrante principale (112) et un joint d'étanchéité (116) disposé sur une surface d'étanchéité (114) pour séparer de manière étanche aux fluides la zone côté brut (14) et la zone côté pur (15) du boîtier de filtre (12), et
une cartouche filtrante secondaire (200) disposée en aval de la cartouche filtrante principale (100) avec une surface d'afflux de la cartouche filtrante secondaire (210), une direction de flux de la cartouche filtrante secondaire (Y1) et une surface d'écoulement de la cartouche filtrante secondaire (212),
dans lequel la surface d'étanchéité (114) est disposée obliquement par rapport à la direction de flux de la cartouche filtrante principale (X1) de la cartouche filtrante principale (100).

10. Filtre (10) selon la revendication 8 ou 9,
dans lequel le boîtier de filtre présente une ouverture d'écoulement qui, vue dans la direction d'insertion, est disposée en dessous de l'élément filtrant principal, dans lequel la cartouche filtrante principale fait saillie au-delà de l'ouverture d'écoulement, vue dans la direction de flux principale de l'élément filtrant principal.

11. Filtre selon la revendication 10, dans lequel
la surface d'étanchéité (114) et la direction de flux principale (X1) forment un angle compris entre 80° et 10°.

12. Filtre selon l'une des revendications 10 à 11 précédentes, dans lequel la surface d'étanchéité (114) et la surface d'écoulement de la cartouche filtrante principale (112) sont situées sur un seul et même plan.

13. Filtre selon l'une des revendications 10 à 12 précédentes, dans lequel
le boîtier de filtre (12) présente une direction d'afflux (X), une direction d'écoulement (Y) et une zone d'écoulement (24) avec une ouverture d'écoulement, et une tubulure d'écoulement (26) pouvant être fixée à la zone d'écoulement (24), dans lequel la zone d'écoulement (24) présente une surface de fixation (25) pour la tubulure d'écoulement (26) et la surface de fixation (25) forme un angle de 45° avec la direction de flux de la cartouche filtrante principale (X1).

14. Filtre selon l'une des revendications 10 à 13 précédentes, dans lequel
la cartouche filtrante principale (100) peut être insérée dans et retirée du boîtier de filtre (12) le long d'un axe d'insertion (Z) qui forme avec la direction de flux principale (X1) un angle compris entre 90° et l'angle formé par la surface d'étanchéité (114) et la direction de flux principale (X1),
le boîtier de filtre (12) (13) présente un couvercle qui est conçu de telle manière qu'en état de fermeture du boîtier de filtre (12), il exerce une force sur la cartouche filtrante principale (100) en direction de la surface d'étanchéité (114).
